# EUROPEAN PATENT APPLICATION

(11) **EP 4 832 557 A1**
(43) Date of publication of application: **28.10.2026**
(21) Application number: 23962213.7
(22) Date of filing: 20.12.2023
(51) Int. Cl.: H04W 24/10

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); OKUMURA, Mamoru, Tokyo 100-6150 (JP); SHIBAIKE, Naoya, Tokyo 100-6150 (JP); NAGATA, Satoshi, Tokyo 100-6150 (JP); WANG, Jing, Beijing,100190 (CN); SUN, Weiqi, Beijing,100190 (CN); LI, Xiang, Beijing, 100190 (CN); HOU, Xiaolin, Beijing, 100190 (CN); CHEN, Lan, Beijing, 100190 (CN)
(74) Representative: Hoffmann Eitle
(86) International application number: PCT/JP2023/045800
(87) International publication number: WO 2025/134292

(57) **Abstract**

A terminal according to an aspect of the present disclosure includes: a receiving section that receives, in a case where group-based beam reporting is not configured, a configuration regarding the number of channel measurement resources (CMRs) to be reported; and a control section that controls transmission of reporting of a plurality of CMRs based on the configuration. According to the aspect of the present disclosure, the beam measurement/reporting can be appropriately performed.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and the like (NPL 1). Furthermore, the specifications of LTE-Advanced (3GPP Rel. 10 to 14) have been drafted for the purpose of further increasing capacity and advancement of LTE (third generation partnership project (3GPP (registered trademark)) release (Rel.) 8 and 9).

Successor systems to LTE (for example, also referred to as 5th generation mobile communication system (5G), 5G+ (plus), 6th generation mobile communication system (6G), New Radio (NR), or 3GPP Rel. 15 and subsequent releases) are also being studied.

### Citation List

### Non Patent Literature

NPL 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

In a future radio communication system (for example, Rel. 20 and subsequent releases), it has been studied that a terminal (a user terminal, or a user equipment (UE)) performs cell-free communication that performs communication using units smaller than existing cells.

However, consideration on beam measurement/reporting in cell-free communication is not sufficient. In this case, the communication throughput may decrease.

Therefore, an object of the present disclosure is to provide a terminal, a radio communication method, and a base station capable of appropriately performing beam measurement/reporting.

### Solution to Problem

A terminal according to an aspect of the present disclosure includes: a receiving section that receives, in a case where group-based beam reporting is not configured, a configuration regarding the number of channel measurement resources (CMRs) to be reported; and a control section that controls transmission of reporting of a plurality of CMRs based on the configuration.

### Advantageous Effects of Invention

According to the aspect of the present disclosure, the beam measurement/reporting can be appropriately performed.

### Brief Description of Drawings

[FIG. 1] FIGS. 1A and 1B are diagrams illustrating an example of RRC information elements regarding CSI reporting configuration and CSI resource configuration.
[FIG. 2] FIGS. 2A and 2B are diagrams illustrating an example of an RRC information elements regarding an NZP CSI-RS resource set and a CSI-SSB resource set.
[FIG. 3] FIG. 3 is a diagram illustrating an example of RRC information elements regarding a TCI state.
[FIG. 4] FIG. 4 is a diagram illustrating an example of an RRC information element (CSI-ReportConfig) in Rel. 16.
[FIG. 5] FIG. 5 is a diagram illustrating an example of a CSI report in Rel. 15 NR.
[FIG. 6] FIG. 6 is a diagram illustrating an example of a CSI report in a case where enhanced group-based beam reporting is performed.
[FIG. 7] FIGS. 7A and 7B are diagrams illustrating an overview of MIMO.
[FIG. 8] FIGS. 8A and 8B are diagrams illustrating an overview of a cellular system.
[FIG. 9] FIGS. 9A to 9C are diagrams illustrating an example of an overview of Assumption 1 of a cell-free configuration.
[FIG. 10] FIGS. 10A and 10B are diagrams illustrating examples of a CMR group and a CMR.
[FIG. 11] FIGS. 11A and 11B are diagrams illustrating examples of a CMR group and a CMR.
[FIG. 12] FIGS. 12A and 12B are diagrams illustrating examples of a CMR group and a CMR.
[FIG. 13] FIGS. 13A and 13B are diagrams illustrating examples of a CMR group and a CMR.
[FIG. 14] FIGS. 14A to 14C are diagrams illustrating an example of a CSI report.
[FIG. 15] FIGS. 15A to 15C are diagrams illustrating an example of a CSI report.
[FIG. 16] FIG. 16 is a diagram illustrating an example of a CMR group and a CMR.
[FIG. 17] FIG. 17 is a diagram illustrating an example of a CMR group and a CMR.
[FIG. 18] FIG. 18 is a diagram illustrating an example of a CMR group and a CMR.
[FIG. 19] FIG. 19 is a diagram illustrating an example of a CMR group and a CMR.
[FIG. 20] FIGS. 20A and 20B are diagrams illustrating an example of a CSI report.
[FIG. 21] FIG. 21 is a diagram illustrating an example of a schematic configuration of a radio communication system according to one embodiment.
[FIG. 22] FIG. 22 is a diagram illustrating an example of a configuration of a base station according to one embodiment.
[FIG. 23] FIG. 23 is a diagram illustrating an example of a configuration of a user terminal according to one embodiment.
[FIG. 24] FIG. 24 is a diagram illustrating an example of a hardware configuration of a base station and a user terminal according to one embodiment.
[FIG. 25] FIG. 25 is a diagram illustrating an example of a vehicle according to one embodiment.

### Description of Embodiments

### (CSI)

In NR, a UE measures a channel state by using a reference signal (or a resource for the reference signal) and feeds back (reports) Channel State Information (CSI) to a network (for example, a base station).

The UE may measure the channel state using at least one of a channel state information reference signal (CSI-RS), a synchronization signal/physical broadcast channel (SS/PBCH) block, a synchronization signal (SS), or a demodulation reference signal (DMRS).

A CSI-RS resource may include at least one of a non zero power (NZP) CSI-RS resource, a zero power (ZP) CSI-RS resource, or a CSI interference measurement (CSI-IM) resource.

A resource for measuring a signal component for CSI may be referred to as a Signal Measurement Resource (SMR) or a Channel Measurement Resource (CMR). The SMR (CMR) may include, for example, an NZP CSI-RS resource for channel measurement, and an SSB.

A resource for measuring an interference component for CSI may be referred to as an Interference Measurement Resource (IMR). The IMR may include, for example, at least one of an NZP CSI-RS resource for interference measurement, an SSB, a ZP CSI-RS resource, or a CSI-IM resource.

The SS/PBCH block is a block including a synchronization signal (for example, primary synchronization signal (PSS) and secondary synchronization signal (SSS)) and a PBCH (and the corresponding DMRS), and may be referred to as an SS block (SSB) or the like.

Note that, the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), an L1-RSRP (layer 1 reference signal received power), L1-RSRQ (reference signal received quality), an L1-SINR (signal to interference plus noise ratio), or an L1-SNR (signal to noise ratio).

The CSI may have a plurality of parts. A CSI part 1 may include information with a relatively small number of bits (for example, the RI). A CSI part 2 may include information with a relatively large number of bits (for example, the CQI) such as information determined based on the CSI part 1.

Furthermore, the CSI may also be classified into several CSI types. The type and size of information to be reported may be different depending on the CSI type. For example, a CSI type configured for performing communication using a single beam (also referred to as type 1 (type I) CSI, CSI for a single beam, or the like), and a CSI type configured for performing communication using multiple beams (also referred to as type 2 (type II) CSI, CSI for multiple beams, or the like) may be specified. The application of CSI types is not limited to this.

As a CSI feedback method, Periodic CSI (P-CSI) reporting, Aperiodic CSI (A-CSI) reporting, Semi-Persistent CSI (SP-CSI) reporting and the like are under study.

The UE may be notified of CSI measurement configuration information by using higher layer signaling, physical layer signaling, or a combination thereof.

In the present disclosure, the higher layer signaling may be any of, for example, Radio Resource Control (RRC) signaling, Medium Access Control (MAC) signaling, broadcast information, and the like, or a combination thereof.

For example, a MAC Control Element (MAC CE), a MAC Protocol Data Unit (PDU), or the like may be used for the MAC signaling. The broadcast information may be, for example, a Master Information Block (MIB), a System Information Block (SIB), Remaining Minimum System Information (RMSI), Other System Information (OSI), or the like.

The physical layer signaling may be, for example, Downlink Control Information (DCI).

The CSI measurement configuration information may be configured using, for example, the RRC information element "CSI-MeasConfig". The CSI measurement configuration information may include CSI resource configuration information (RRC information element "CSI-ResourceConfig"), and CSI reporting configuration information (RRC information element "CSI-ReportConfig"). The CSI resource configuration information is related to a resource for CSI measurement, and the CSI reporting configuration information is related to how the UE performs CSI reporting.

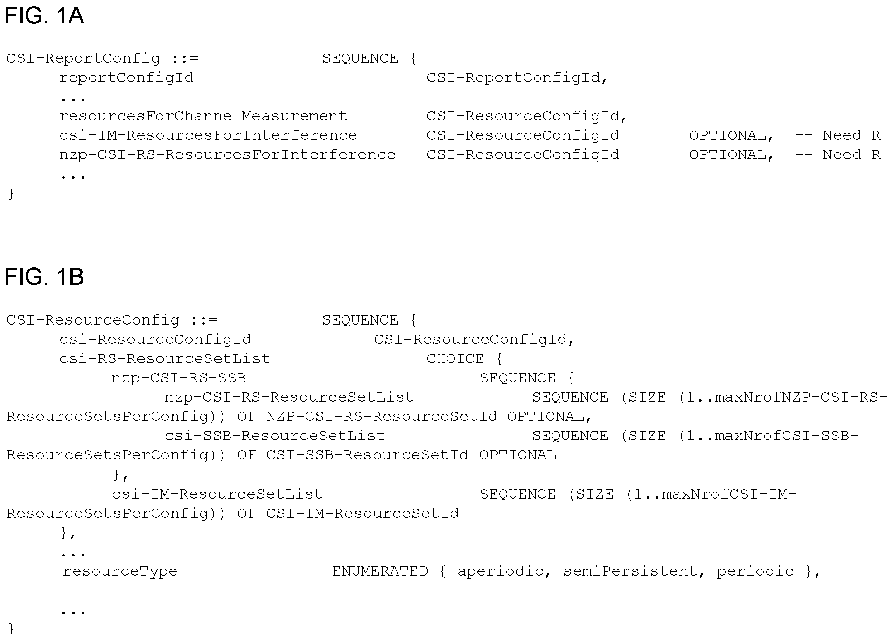

FIGS. 1A and 1B are diagrams illustrating an example of RRC information elements regarding CSI reporting configuration and CSI resource configuration. In this example, an excerpt of a field (which may be referred to as a parameter) included in an information element is illustrated. FIGS. 1A and 1B are described using Abstract Syntax Notation One (ASN.1) notation. Note that drawings relating to other RRC information elements (or RRC parameters) of the present disclosure are also described using similar notation.

As illustrated in FIG. 1A, the CSI reporting configuration information ("CSI-ReportConfig") includes resource information for channel measurement ("resourcesForChannelMeasurement"). Furthermore, the CSI reporting configuration information may include interference measurement resource information (for example, NZP CSI-RS resource information for interference measurement ("nzp-CSI-RS-ResourcesForInterference"), and CSI-IM resource information for interference measurement ("csi-IM-ResourcesForInterference")). These pieces of resource information correspond to CSI resource configuration information IDs (Identifiers) ("CSI-ResourceConfigId").

Note that the CSI resource configuration information IDs (which may be referred to as CSI resource configuration IDs) corresponding to respective pieces of resource information may have one or more same values or may each have different values.

As illustrated in FIG. 1B, the CSI resource configuration information ("CSI-ResourceConfig") may include a CSI resource configuration information ID, CSI-RS resource set list information ("csi-RS-ResourceSetList"), and a resource type ("resourceType"). The CSI-RS resource set list may include at least one of NZP CSI-RS and SSB information ("nzp-CSI-RS-SSB") for measurement or CSI-IM resource set list information ("csi-IM-ResourceSetList").

The resource type represents a behavior of a time domain of this resource configuration, and "aperiodic", "semi-persistent", and "periodic" can be configured. For example, the corresponding respective CSI-RSs may be referred to as A-CSI-RS, SP-CSI-RS, and P-CSI-RS.

Note that a channel measurement resource may be used for computation of, for example, a CQI, PMI, L1-RSRP, and the like. Furthermore, the interference measurement resource may be used for computation of the L1-SINR, L1-SNR, L1-RSRQ, and other indicators regarding interference.

In a case where the interference measurement is performed using CSI-IM, each CSI-RS for channel measurement may be associated with the CSI-IM resource from a resource perspective, based on an order of the CSI-RS resource and the CSI-IM resource in the corresponding resource set.

The "nzp-CSI-RS-SSB" may include NZP CSI-RS resource set list information ("nzp-CSI-RS-ResourceSetList") and SSB resource set list information for CSI measurement ("csi-SSB-ResourceSetList"). These pieces of list information correspond to one or more NZP CSI-RS resource set IDs ("NZP-CSI-RS-ResourceSetId") and CSI-SSB resource set IDs ("CSI-SSB-ResourceSetId"), and may be used for specifying resources to be measured.

The NZP CSI-RS resource set list information ("nzp-CSI-RS-ResourceSetList") may include NZP CSI-RS resource set IDs ("NZP-CSI-RS-ResourceSetId") of a maximum number of NZP CSI-RS resource sets per CSI resource configuration ("maxNrofNZP-CSI-RS-ResourceSetsPerConfig"). The maximum number of NZP CSI-RS resource sets per CSI resource configuration ("maxNrofNZP-CSI-RS-ResourceSetsPerConfig") is at most 16 in a case where the resource type is "aperiodic", and may be 1 otherwise (in a case where the resource type is "semi-persistent" or "periodic").

The SSB resource set list information for CSI measurement ("csi-SSB-ResourceSetList") may include CSI-SSB resource set IDs ("CSI-SSB-ResourceSetId") of a maximum number of SSB resource sets for CSI measurement per CSI resource configuration ("maxNrofCSI-SSB-ResourceSetsPerConfig"). The maximum number of SSB resource sets for CSI measurement per CSI resource configuration ("maxNrofCSI-SSB-ResourceSetsPerConfig") may be 1.

The CSI-IM resource set list information ("csi-IM-ResourceSetList") may include CSI-IM resource set IDs ("CSI-IM-ResourceSetId") of a maximum number of CSI-IM resource sets per CSI resource configuration ("maxNrofCSI-IM-ResourceSetsPerConfig"). The maximum number of CSI-IM resource sets per CSI resource configuration ("maxNrofCSI-IM-ResourceSetsPerConfig") is at most 16 in a case where the resource type is "aperiodic", and otherwise may be 1.

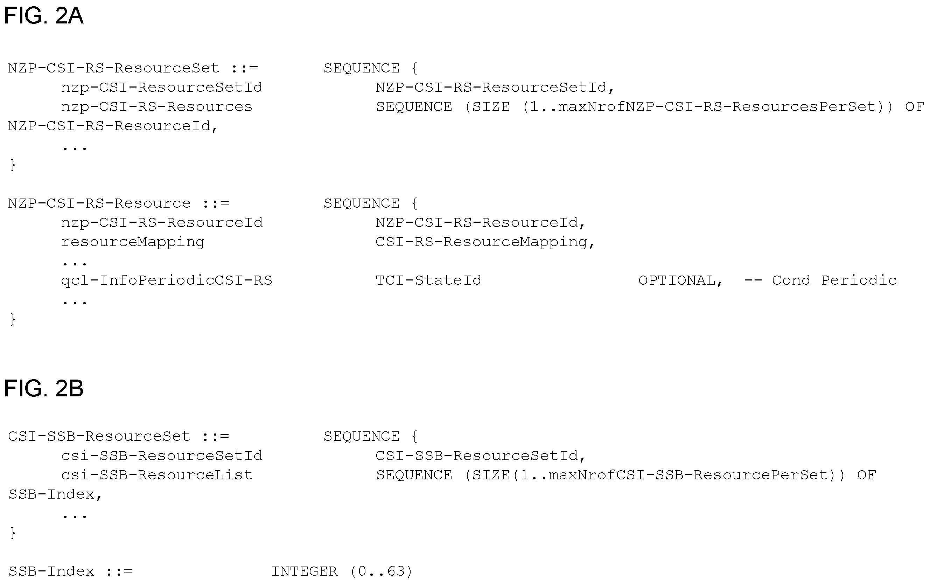

FIGS. 2A and 2B are diagrams illustrating an example of RRC information elements regarding the NZP CSI-RS resource set and the CSI-SSB resource set.

As illustrated in FIG. 2A, the NZP CSI-RS resource set information ("NZP-CSI-RS-ResourceSet") includes an NZP CSI-RS resource set ID and one or more NZP CSI-RS resource IDs ("NZP-CSI-RS-ResourceId").

The NZP CSI-RS resource information ("NZP-CSI-RS-Resource") may include the NZP CSI-RS resource ID and an ID ("TCI-stateId") of a Transmission Configuration Indication state (TCI state). The TCI state will be described later.

As illustrated in FIG. 2B, CSI-SSB resource set information ("CSI-SSB-ResourceSet") includes a CSI-SSB resource set ID and one or more pieces of SSB index information ("SSB-Index"). The SSB index information is, for example, an integer from 0 to 63, and may be used for identifying an SSB in an SS burst.

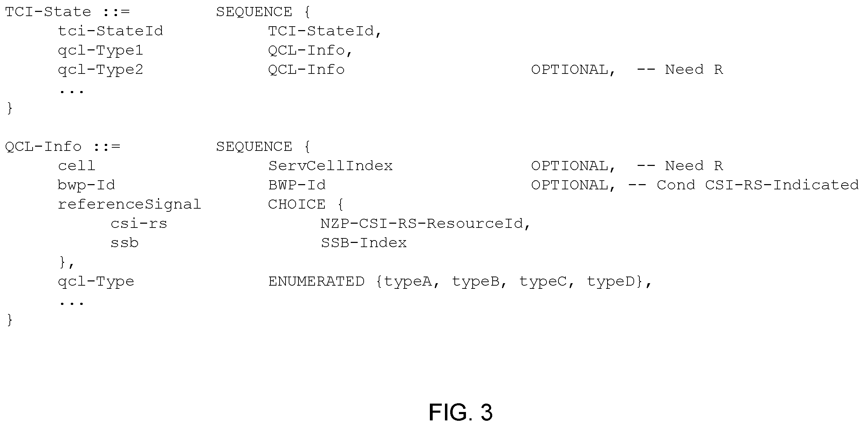

FIG. 3 is a diagram illustrating an example of the RRC information element regarding the TCI state.

The TCI state is information regarding Quasi-Co-Location (QCL) of a channel or a signal, and may also be referred to as a spatial reception parameter, spatial relation information (spatial relation info), or the like. The TCI state may be configured or specified for the UE per channel or per signal.

As illustrated in FIG. 3, TCI state information ("TCI-State") may include a TCI state ID and one or more pieces of QCL information ("QCL-Info"). The QCL information may include at least one of information regarding a reference signal of a QCL source (RS-related information ("referenceSignal")) or information indicating a QCL type (QCL type information ("qcl-Type")). The RS-related information may include information such as an RS index (for example, NZP CSI-RS resource ID, SSB index), an index of a serving cell, and an index of a bandwidth part (BWP) in which the RS is located.

The UE may control reception processing (for example, at least one of reception, demapping, demodulation, decoding, reception beam determination, or the like), transmission processing (for example, at least one of transmission, mapping, modulation, encoding, transmission beam determination, or the like), and the like, based on the TCI state corresponding to the TCI state ID associated with at least one of the signal or the channel (expressed as signal/channel).

As illustrated in FIG. 2A, for a P-CSI-RS, a related TCI state may be configured by RRC. Note that, for the P-CSI-RS, the SP-CSI-RS, and the A-CSI-RS, the related TCI state may be determined based on higher layer signaling, physical layer signaling, or a combination thereof.

### (TCI, Spatial Relation, and QCL)

In NR, controlling reception processing (for example, at least one of reception, demapping, demodulation, or decoding) and transmission processing (for example, at least one of transmission, mapping, precoding, modulation, or encoding) in a UE of at least one of a signal or a channel (expressed as a signal/channel) based on a transmission configuration indication state (TCI state) has been studied.

The TCI state may represent what is applied to a downlink signal/channel. A state corresponding to the TCI state applied to an uplink signal/channel may be expressed as a spatial relation.

The TCI state is information regarding Quasi-Co-Location (QCL) of the signal/channel and may also be referred to as a spatial reception parameter, spatial relation information, or the like. The TCI state may be configured for the UE per channel or per signal.

The QCL is an indicator indicating a statistical property of the signal/channel. For example, this may mean that, in a case where a certain signal/channel and another signal/channel have a QCL relationship, it may be assumed that at least one of a Doppler shift, a Doppler spread, an average delay, a delay spread, or a spatial parameter (for example, the spatial reception parameter (spatial Rx parameter)) is the same (being QCL with respect to at least one of these), among these plurality of different signals/channels.

Note that the spatial reception parameter may correspond to a UE reception beam (for example, a reception analog beam), and the beam may be specified based on a spatial QCL. A QCL (or at least one element of the QCL) in the present disclosure may be interchangeable with a spatial QCL (sQCL).

A plurality of types of QCL (QCL types) may be defined. For example, four different QCL types A to D, which differ in parameters (or parameter sets) that can be assumed to be same, may be provided, and the corresponding parameters (which may be referred to as QCL parameters) are described as follows:
- QCL type A (QCL-A): Doppler shift, Doppler spread, average delay, and delay spread;
- QCL type B (QCL-B): Doppler shift and Doppler spread;
- QCL type C (QCL-C): Doppler shift and average delay; and
- QCL type D (QCL-D): Spatial reception parameter.

It may be referred to as a QCL assumption for the UE to assume that a certain control resource set (CORESET), channel, or reference signal has a specific QCL (for example, QCL type D) relationship with another CORESET, channel, or reference signal.

Based on the TCI state or the QCL assumption of the signal/channel, the UE may determine at least one of a transmission beam (Tx beam) and a reception beam (Rx beam) of the corresponding signal/channel.

The TCI state may be, for example, information regarding the QCL between a target channel (in other words, a reference signal (RS) for the corresponding channel) and another signal (for example, another RS). The TCI state may be configured (instructed) by higher layer signaling, physical layer signaling, or a combination thereof.

Note that a channel/signal to which the TCI state is applied may be referred to as a target channel/reference signal (RS), or simply as a target, and the other signal may be referred to as a reference reference signal (reference RS), a source RS, or simply as a reference.

A channel for which a TCI state or spatial relation is configured (specified) may be, for example, at least one of a physical downlink shared channel (PDSCH), a physical downlink control channel (PDCCH), a physical uplink shared channel (PUSCH), and a physical uplink control channel (PUCCH).

Furthermore, an RS having a QCL relationship with the channel may be, for example, at least one of a synchronization signal block (SSB), a channel state information reference signal (CSI-RS), a sounding reference signal (SRS), a tracking CSI-RS (also referred to as a tracking reference signal (TRS)), a QCL detection reference signal (also referred to as a QRS), or a demodulation reference signal (DMRS).

The SSB is a signal block including at least one of a primary synchronization signal (PSS), a secondary synchronization signal (SSS), or a broadcast channel (physical broadcast channel (PBCH)). The SSB may be referred to as an SS/PBCH block.

An RS of QCL type X in a TCI state may mean an RS in a QCL type X relationship with (DMRS of) a certain channel/signal, and this RS may be referred to as a QCL source of QCL type X in the TCI state.

### (Beam Management)

In Rel. 15 NR, a Beam Management (BM) method has been studied. In the beam management, beam selection is performed based on the L1-RSRP reported by the UE. Changing (switching) a beam of a signal/channel may be equivalent to changing at least one of a TCI state or a QCL assumption of the signal/channel.

The UE may report (transmit) a measurement result for beam management using a physical uplink control channel (PUCCH) or a physical uplink shared channel (PUSCH). The measurement result may be, for example, CSI including at least one of the L1-RSRP, L1-RSRQ, L1-SINR, or L1-SNR.

The measurement result (for example, CSI) reported for beam management may be referred to as beam measurement, beam measurement report, beam report, beam report CSI, or the like.

The CSI measurement for the beam report may include interference measurement. The UE may measure channel quality, interference, and the like using a resource for CSI measurement, and derive the beam report.

The beam report may include a result of at least one of channel quality measurement or interference measurement. The result of the channel quality measurement may include, for example, the L1-RSRP. The result of the interference measurement may include the L1-SINR, L1-SNR, L1-RSRQ, and other indicators regarding interference (for example, any indicator other than the L1-RSRP).

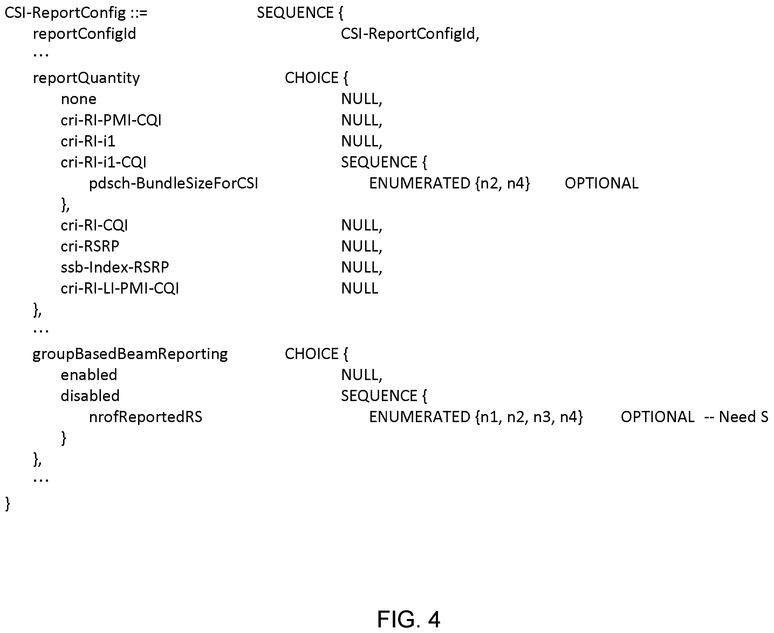

The CSI reporting may be performed based on the CSI reporting configuration configured by a higher layer parameter. FIG. 4 is an example of the RRC information element (CSI-ReportConfig) in Rel. 16. FIG. 4 is an excerpt of another part of the same CSI reporting configuration information (CSI-ReportConfig) as that in FIG. 1A.

The CSI reporting configuration information may include a "report quantity" (which may be represented by an RRC parameter "reportQuantity") that is information regarding a parameter to be reported in one report instance (for example, one CSI). The report quantity is defined by the type of an ASN.1 object "choice". Therefore, one of the parameters (cri-RSRP, ssb-Index-RSRP, and the like) defined as the report quantity is configured.

The UE for which a higher layer parameter (for example, an RRC parameter regarding group-based beam reporting "groupBasedBeamReporting") included in the CSI reporting configuration information is configured to be disabled may include, for each report setting, beam measurement resource IDs (for example, SSBRI, CRI), the number of which varies depending on a higher layer parameter (for example, the RRC parameter "nrofReportedRS" indicating the number of RSs to be reported) included in the CSI reporting configuration information and measurement results (for example, L1-RSRP) corresponding to the respective IDs in the beam report (one report instance).

The UE for which groupBasedBeamReporting is configured to be enabled reports, for each report setting, CRI/SSBRIs on a group basis (for example, CRIs/SSBRIs for one group). The group includes a plurality of (for example, two) CRIs/SSBRIs. It may mean that a plurality of (for example, two) CRIs/SSBRIs are simultaneously received by the UE.

For example, the UE for which groupBasedBeamReporting is configured to be enabled may include, for each report setting, two different beam measurement resource IDs (for example, CRIs/SSBRIs) and two measurement results (for example, L1-RSRP) corresponding to the respective IDs in the beam report. The two beam measurement resources (CSI-RS resource, SSB resource) may be simultaneously received by the UE by using one spatial domain reception filter or may be simultaneously received by the UE by using a plurality of simultaneous spatial domain reception filters.

Furthermore, the NZP CSI-RS resource set information illustrated in FIG. 2A may include information regarding repetition in resources in the resource set. The information regarding the repetition may indicate, for example, 'on' or 'off'. Note that 'on' may be expressed as 'enabled' or 'valid', and 'off' may be expressed as 'disabled' or 'invalid'.

For example, for a resource set for which repetition is configured to be 'on', the UE may assume that resources in the resource set have been transmitted using the same downlink spatial domain transmission filter. In this case, the UE may assume that the resources in the resource set have been transmitted using the same beam (for example, from the same base station using the same beam).

For a resource set for which repetition is configured to be 'off', the UE may perform control such that the UE is not required to assume (or may not assume) that the resources in the resource set have been transmitted using the same downlink spatial domain transmission filter. In this case, the UE may assume that the resources in the resource set are not transmitted using the same beam (transmitted using different beams). In other words, the UE may assume that the base station performs beam sweeping for a resource set for which repetition is configured to be 'off'.

In Rel. 15 NR, among report quantities, cri-RSRP and ssb-Index-RSRP are related to beam management. The UE for which the cri-RSRP is configured as the report quantity reports the CRI and the L1-RSRP corresponding to the CRI. The UE for which the ssb-Index-RSRP is configured as the report quantity reports the SSBRI and the L1-RSRP corresponding to the SSBRI.

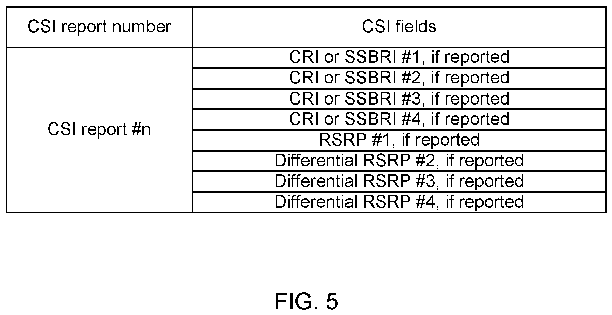

FIG. 5 is a diagram illustrating an example of the CSI report in Rel. 15 NR. FIG. 5 illustrates a mapping order of CSI fields included in one CSI report (n-th CSI report #n) for CSI/RSRP or SSBRI/RSRP reporting as defined in Rel. 15.

The CSI report of FIG. 5 may include one or more sets of CRI/SSBRI and RSRP. The number of these sets may be set by a higher layer parameter (for example, the RRC parameter "nrofReportedRS") indicating the number of reference signal resources to be reported.

For L1-RSRP reporting, in a case where nrofReportedRS is configured to be 1 (the value is 'n1'), RSRP #1, which is a field of a given number of bits (for example, m bits) indicating the L1-RSRP of the largest measurement value, is included in the CSI report. In Rel. 15 NR, m = 7.

For L1-RSRP reporting, in a case where nrofReportedRS is configured to be larger than 1, or groupBasedBeamReporting is configured to be enabled, the UE uses differential L1-RSRP-based reporting. Specifically, the UE includes, in the same CSI report (reporting instance), RSRP #1 indicating the L1-RSRP having the largest measurement value, and differential RSRP #k computed (for example, as a difference from the measurement value) with reference to the largest measurement value for the L1-RSRP having the k-th largest (in FIG. 5, k = 2, 3, 4) measurement value. Here, the differential RSRP #k may be a field of bits with the number (for example, n bits) smaller than the given number. In Rel. 15 NR, n = 4.

For example, for each group, seven bits of the absolute RSRP value for the first beam (range from -140 to -44 dBm using 1 dB step size) and four bits of the differential RSRP value for the second beam are reported.

Note that in a case where groupBasedBeamReporting is configured to be enabled, the UE includes RSRP #1 and differential RSRP #2 in the same CSI report.

The CRI/SSBRI #k in FIG. 5 is a field indicating the CRI/SSBRI corresponding to the RSRP #k or the differential RSRP #k (included in a case where the RSRP #k or the differential RSRP #k is reported).

Note that in NR Rel. 16 and subsequent releases, nrofReportedRS may be a value of 4 or more, or may be 4 or more. The CSI report may include four or more sets of CRI/SSBRI and RSRP. The above m and n are not limited to 7 and 4, respectively.

Furthermore, in NR Rel. 16 and subsequent releases, the L1-SINR reporting may be performed. For the L1-SINR reporting, contents obtained by replacing RSRP in the L1-RSRP reporting described above with SINR may be applied. Note that, in this case, the configuration/parameter for the SINR may be different from the configuration/parameter for the RSRP, and for example, the nrofReportedRS may be interchangeable with nrofReportedRSForSINR indicating the number of reference signal resources to be reported for the SINR.

For L1-RSRP computation, the UE may be configured with CSI-RS resource settings for a maximum of 16 CSI-RS resource sets, including a maximum of 64 resources in each resource set. The total number of different CSI-RS resources across all resource sets may be 128 or less.

For L1-SINR computation, in channel measurement, the UE may be configured with CSI-RS resource settings for a maximum of 16 CSI-RS resource sets including a maximum of 64 CSI-RS resources or a maximum of 64 SS/PBCH blocks in total.

In a case where one resource setting linked to CSI-ReportConfig has a plurality of aperiodic resource sets for a UE for which the information regarding the CSI aperiodic trigger state list (higher layer parameter "CSI-AperiodicTriggerStateList") is configured, only one of the aperiodic CSI-RS resources of the resource setting may be associated with the trigger state. At this time, the UE may be configured using the higher layer in accordance with each resource setting for each trigger state so as to select one CSI-IM/NZP CSI-RS resource set from the resource settings.

The UE may not assume (or expect) that at least one of NZP CSI-RS resources or SS/PBCH block resources exceeding 64 has been configured in the channel measurement resource setting of CSI-ReportConfig for which the report quantity (higher layer parameter reportQuantity) is configured as "none", "cri-RI-CQI", "cri-RSRP", "ssb-Index-RSRP", "cri-SINR", or "ssb-Index-SINR".

In a case where CSI-ReportConfig with a report quantity (higher layer parameter reportQuantity) configured as "cri-RSRP", "cri-SINR", or "none" is configured for the UE, and the CSI-ReportConfig links to a resource setting with a higher layer parameter resourceType configured as "aperiodic", the UE may not assume that more than 16 CSI-RS resources are configured in a CSI-RS resource set included in the resource setting.

In a case where CSI-ReportConfig, for which the report quantity (higher layer parameter reportQuantity) is configured as "cri-RSRP", "cri-RI-PMI-CQI", "cri-RI-i1", "cri-RI-i1-CQI", "cri-RI-CQI", "cri-RI-LI-PMI-CQI", or "cri-SINR", is configured for the UE and two or more channel measurement resources are configured in the corresponding resource set, the UE may derive a CSI parameter other than the CRI, based on the reported CRI. Here, CRI k (k ≥ 0) may correspond to the (k+1)-th configured entry of related nzp-CSI-RS-Resources in the corresponding NZP-CSI-RS-ResourceSet for channel measurement and the (k+1)-th entry of related csi-IM-Resource in the csi-IM-ResourceSet or the (k+1)-th entry of related nzp-CSI-RS-Resources in the corresponding NZP-CSI-RS-ResourceSet for interference measurement (in a case where reportQuantity is configured as "cri-SINR" in CSI-ReportConfig). In a case where two CSI-RS resources are configured, each resource may include a maximum of 16 CSI-RS ports. In a case where three or more and eight or less CSI-RS resources are configured, each resource may include a maximum of eight CSI-RS ports.

In a case where CSI-ReportConfig with a report quantity (higher layer parameter reportQuantity) configured as "ssb-Index-RSRP" is configured for the UE, the SSBRI may be reported. Here, SSBRI k (k ≥ 0) may correspond to the (k+1)-th entry configured in related csi-SSB-ResourceList in corresponding CSI-SSB-ResourceSet.

In a case where CSI-ReportConfig with a report quantity (higher layer parameter reportQuantity) configured as "ssb-Index-SINR" is configured for the UE, the L1-SINR may be derived based on the reported SSBRI. Here, SSBRI k (k ≥ 0) may correspond to the (k+1)-th configured entry of the related csi-SSB-ResourceList in the corresponding CSI-SSB-ResourceSet for channel measurement and the (k+1)-th entry of the related csi-IM-Resource in the csi-IM-ResourceSet or the (k+1)-th entry of the related nzp-CSI-RS-Resources in the corresponding NZP-CSI-RS-ResourceSet for interference measurement.

### (Enhanced Group-Based Beam Reporting)

For a future radio communication system (for example, Rel. 17 and subsequent releases), beam management-related extensions (for example, which may be referred to as a beam report suitable for a plurality of TRPs, or an enhanced group-based beam reporting) of a user terminal (User Equipment (UE)) having a plurality of panels (multi-panels), a plurality of transmission/reception points (multiple transmission/reception points (TRP)), and the like have been studied.

Since groupBasedBeamReporting described above enables one group including a plurality (for example, two) CRIs/SSBRIs to be reported in one report, it is suitable in a case where multi-TRP transmission, multi-panel reception, or the like is applied. For example, the same can be used in order to report the best beam of TRP1 as RSRP #1 and the best beam of TRP2 as the differential RSRP #2.

In Rel. 15 and 16, the UE for which group-based beam reporting is configured to be enabled can report only one group including two different CRIs/SSBRIs (which may be interchangeable with beam indexes) for each report setting. Therefore, it is assumed that the number of groups that can be reported by group-based beam reporting will be expanded in preparation for Rel. 17.

For example, two channel measurement resource sets (for example, CMR sets) may be configured/triggered with a periodic/semi-persistent/aperiodic resource type. Two channel measurement resource sets (for example, CMR sets) may be, for example, two CSI-SSB-ResourceSets or two NZP-CSI-RS-ResourceSets. The UE may be configured to be capable of reporting a maximum of four groups of CRIs/SSBRIs. Note that the number of groups that can be reported (or, the number of candidates is 1/2/3/4) may be configured by a higher layer parameter.

Each group has a plurality of (for example, two) CRIs/SSBRIs, and the CRIs/SSBRIs of each group may be respectively selected from two CSI resource sets for report setting. Furthermore, the two CRIs/SSBRIs of each group may mean that the UE can perform simultaneous reception (for example, simultaneously receive by using one spatial domain reception filter).

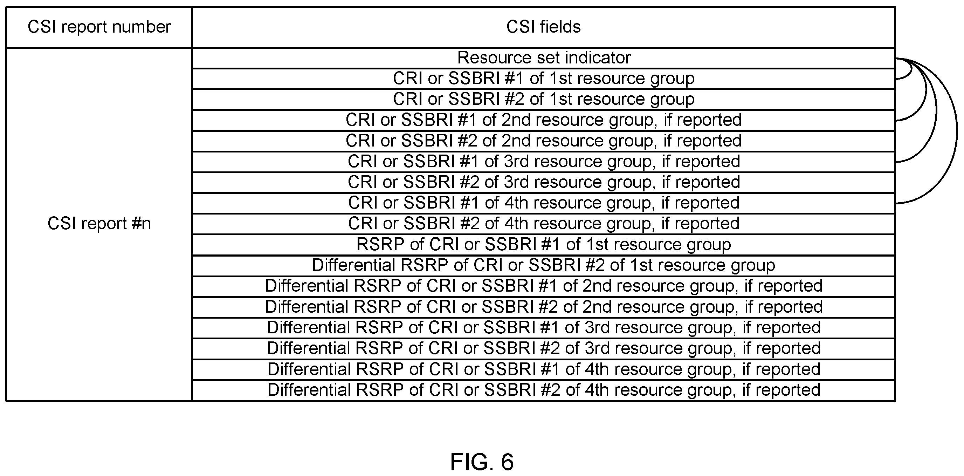

FIG. 6 is a diagram illustrating an example of the CSI report in a case where enhanced group-based beam reporting is performed. FIG. 6 illustrates a mapping order of CSI fields included in one report (for example, the n-th CSI report #n) for group-based CSI/RSRP or SSBRI/RSRP reporting.

The CSI report may include a maximum of X (for example, X = 4) resource groups. Each group includes a plurality of (for example, two) CRIs/SSBRIs. Here, a case where CRI or SSBRI #1 and CRI or SSBRI #2 are reported as each resource group is illustrated.

The resource set indicator (for example, Resource set indicator) may be included in the CSI field. A value of the resource set indicator may indicate a channel measurement resource set for which CRI or SSBRI #1 of a first resource group is reported. For example, a 1-bit resource set indicator with a value of 0 or 1 may indicate a first or second channel measurement resource set, respectively, from which the CRI or SSBRI #1 of the first resource group may be reported. All remaining resource groups (for example, in a case where there are other resource groups to be reported) follow the same mapping order as that of the first resource group. For example, the CRI or SSBRI #1 of all remaining resource groups may be reported (or selected) from the channel measurement resource set indicated by the resource set indicator.

That is, the CRI or SSBRI #1 of each group may be reported (or selected) from the resource set indicated by the resource set indicator (for example, Resource set indicator), and the CRI or SSBRI #2 may be reported (or selected) from another resource set. As described above, in all resource groups, the CRI or SSBRI #1 and the CRI or SSBRI #2 may be reported from different channel measurement resource sets.

Furthermore, the RSRP corresponding to the beam index (for example, CRI or SSBRI) of each resource group is reported. For example, the RSRP of a CRI or SSBRI of a specific group may be reported, and other RSRPs may be reported as differentials from the RSRP of the CRI or SSBRI of the specific group. The RSRP of the CRI or SSBRI of the specific group may be the RSRP of the CRI or SSBRI #1 of the first resource group.

The enhanced group-based beam reporting may be configured (or configured to be enabled/activated) by given higher layer parameters (for example, groupBasedBeamReporting-r17). Alternatively, the enhanced group-based beam reporting may be determined to be enabled in a case where the higher layer parameter (for example, nrofReportedGroups-r17) for the number of groups to report is configured.

### (Event-Based Beam Reporting)

In future radio communication systems, support for event-based beam reporting has been studied. The event-based beam reporting may be referred to as event-triggered beam reporting, and may mean UE-initiated beam reporting.

### <Applicable Case>

The event-based beam reporting may be applied, for example, in at least one of the following cases 1 or 2:
- Case 1: L1-RSRP/SINR beam reporting including serving cell PCI/additional PCI (for example, L1-RSRP/SINR beam reporting including serving cell/additional PCI cells for L1/L2 inter-cell mobility, multi-TRP (M-TRP) inter-cell mobility, or Rel. 18 L1/L2 mobility with cell switching)
- Case 2: L1-RSRP/SINR beam reporting including only serving cell PCI.

In a case where a specific event occurs (in the present disclosure, it may be interchangeable with a specific condition is satisfied/not satisfied), the UE may report a measurement result (for example, L1-RSRP/L1-SINR) to a NW (for example, a base station).

The specific event may be, for example, at least one of an event related to at least one of a serving cell and an additional cell or an event related to beam reporting including at least one of a PCI of the serving cell and a PCI of the additional cell.

### (Cell-Free)

Existing radio communication systems (for example, 5G NR) adopted a cellular scheme in which, in principle, one cell is formed by one antenna/transmission/reception point (TRP). The area formed by the cell is fixed/static.

Furthermore, in existing radio communication systems (for example, Rel. 16 and subsequent releases), distributed Multiple Input Multiple Output (Distributed MIMO, for example, multi-TRP utilizing a plurality of TRPs) has been introduced, which forms a communication area through coverage of a plurality of antennas/TRPs. In the distributed MIMO, simultaneous communication using a plurality of antennas/TRPs and communication using one antenna/TRP can be performed.

By adopting the distributed MIMO, a more preferable line-of-sight environment can be established, and performance improvement related to MIMO can be achieved.

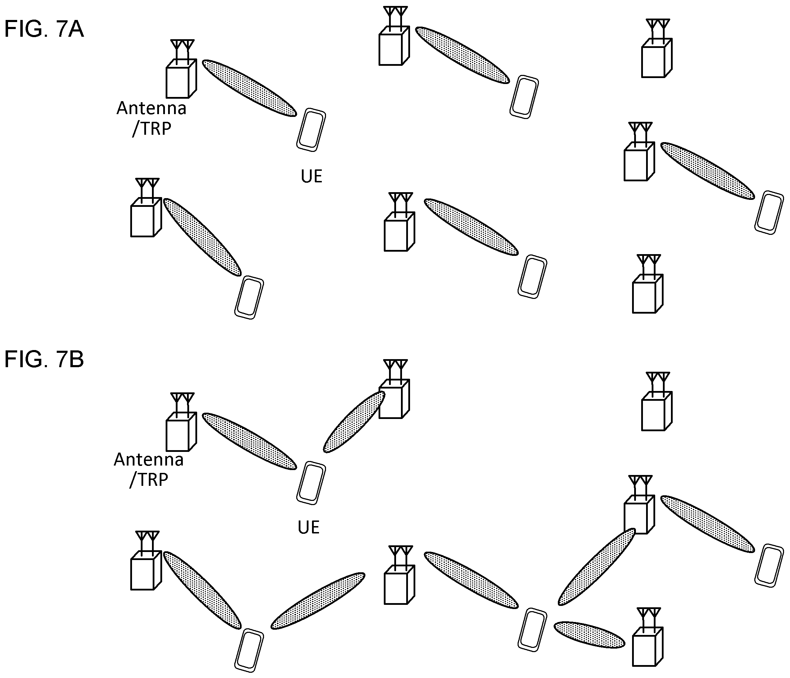

FIGS. 7A and 7B are diagrams illustrating an overview of MIMO. FIG. 7A illustrates an example of Co-located MIMO. In Co-located MIMO, one UE communicates with one antenna/TRP.

On the other hand, FIG. 7B illustrates an example of the distributed MIMO. In the distributed MIMO, one UE communicates with a plurality of coordinated antennas/TRPs.

In future radio communication systems (for example, Rel. 20 and subsequent releases), introduction of cell-free communication has been studied for the purpose of further improving performance and improving energy consumption efficiency through reduction of interference between a plurality of antennas/TRPs, improvement of a line-of-sight environment corresponding to utilization of a high frequency, improvement of frequency utilization efficiency of the entire system, and application of equal and high quality communication to each user.

The cell-free communication may be referred to as cell free massive MIMO (mMIMO) or large-scale distributed MIMO(distributed MIMO, D-MIMO). The cell-free communication uses coherent coordination of a large number of access points. The cell-free communication may include at least one of ultra-dense deployment, scalable cooperation, user-centric clustering, super carrier aggregation, or analog fronthaul. A user plane for cell-free communication may perform more flexible scheduling than existing scheduling. A control plane for cell-free communication may maintain some form of cells to facilitate signaling.

In the cell-free communication, unlike a conventional cellular scheme, one area (which may be referred to as a cell/sub-cell or the like) may be formed by a plurality of antennas/TRPs. That is, the area may mean a cell that does not depend on the position of the antenna/TRP.

In the cell-free communication, a set of antennas/TRPs used for area formation may be changed in accordance with the demand of the UE. For example, the set of antennas/TRPs may be changed based on the number of UEs, the amount of traffic, communication purposes (for example, initial access, data communication, measurement, reporting, and the like), and the like, instead of coverage of antennas/TRPs.

In other words, in the cell-free communication, the coverages between a plurality of antennas/TRPs may overlap.

In the cell-free communication, a direction in which a synchronization signal (for example, it may be referred to as a synchronization signal block (SSB), a synchronization signal/physical broadcast channel (SS/PBCH) block, or the like.) is transmitted may be controlled in each antenna/TRP.

Furthermore, in the cell-free communication, central unit (CU)/distributed unit (DU) may be virtualized for each antenna. Alternatively, each antenna may be managed only by the CU.

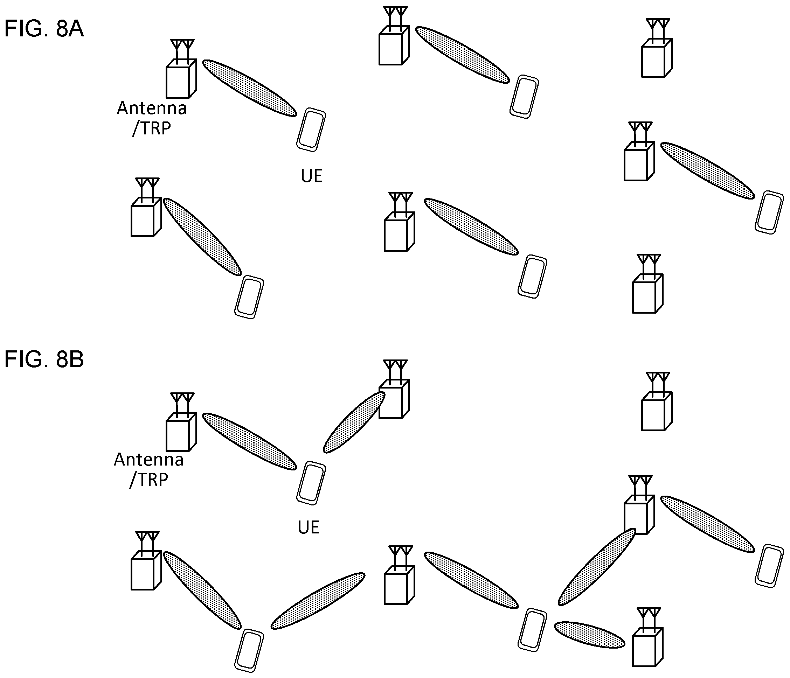

FIG. 8A is a diagram illustrating an overview of the cellular system. FIG. 8A illustrates a cell formed by each antenna/TRP, and the UE performs communication based on the cell.

On the other hand, FIG. 8B is a diagram illustrating an overview of a cell-free system. In the example illustrated in FIG. 8B, the installed antennas/TRPs do not form a fixed/static cell in a cellular system. As illustrated in FIG. 8B, in the cell-free system, one or more antennas/TRPs form an area in accordance with a condition. Therefore, in the cell-free system, each antenna/TRP may not correspond to the same physical cell ID, and areas between a plurality of antennas/TRPs may overlap.

The cell-free communication may be implemented, for example, by adjusting a set of antennas/TRPs controlled by a central control unit (for example, CU).

In the cell-free system, a first cell with a fixed physical range, such as a cell in a 5G NR system (for example, it may be referred to as, for example, a cell, a super cell, a macro cell, a large cell, or the like), and a second cell with a physical range varying semi-statically or dynamically based on a condition (for example, it may be referred to as a sub-cell, area, micro-cell, cell, small cell, second cell in the first cell, or the like) may be formed.

For example, in order to distinguish the first cell from the second cell, the first cell may be referred to as a super cell. In a case where the super cell is composed of a plurality of second cells, the second cell may have the same definition, operation, and coverage as an existing cell in NR. For example, in order to distinguish the second cell from the first cell, the second cell may be referred to as a sub-cell. In a case where the super cell or cell is composed of a plurality of sub-cells, the sub-cell may have the same definition, operation, and coverage as an existing cell in NR.

The first cell may be a cell newly defined in future radio communication systems, or the definition of a cell in an existing radio communication systems may be reused.

For the configurations of the first cell and the second cell, the following Assumptions 1 and 2 are considered:
Assumption 1: The first cell includes a plurality of TRPs having one cell ID (physical cell ID (PCI)). The plurality of TRPs can perform transmission and reception in a coordinated manner.
Assumption 2: The first cell is composed of a plurality of TRPs (or sub-cells) with different cell IDs. The plurality of TRPs/sub-cells can perform transmission and reception in a coordinated manner.

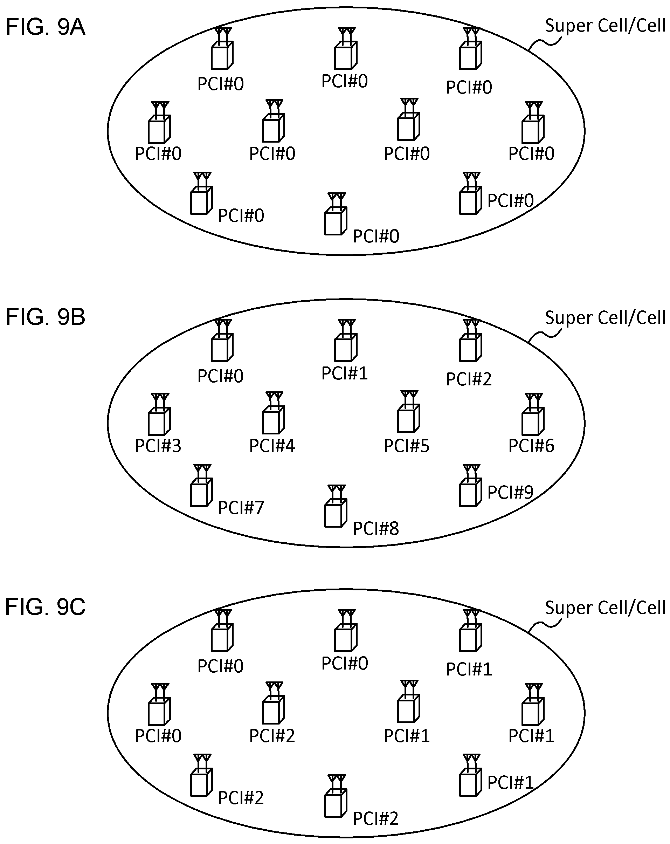

FIG. 9A is a diagram illustrating an example of an overview of Assumption 1 of a cell-free configuration. In the example illustrated in FIG. 9A, each TRP included in the first cell (super cell/cell) has the same PCI (PCI #0). The plurality of TRPs can perform communication with one UE in a coordinated manner.

FIG. 9B is a diagram illustrating an example of an overview of Assumption 2 of a cell-free configuration. In the example illustrated in FIG. 9B, each TRP included in the first cell (super cell/cell) has a different PCI (PCIs #0 to #9). The plurality of TRPs can perform communication with one UE in a coordinated manner.

FIG. 9C is a diagram illustrating another example of an overview of Assumption 2 of a cell-free configuration. In the example illustrated in FIG. 9C, a PCI is assigned to each TRP included in the first cell (super cell/cell). In the example shown in FIG. 9C, unlike the example of FIG. 9B, the same single PCI may correspond to the plurality of TRPs. The plurality of TRPs can perform communication with one UE in a coordinated manner.

Transmission/reception involving coordination of TRPs/sub-cells may be based on at least one of the following several schemes supported in NR.
- Single TRP/sub-cell transmission (single TRP transmission) with dynamic TRP/sub-cell switching
- Joint transmission using a plurality of TRPs/sub-cells (multi-TRP joint transmission) The joint transmission may be based on single DCI or multi-DCI. The joint transmission may be non-coherent joint transmission (NCJT) or coherent joint transmission (CJT).

For cell-free communication, assuming ideal backhaul and tight coordination, in a joint transmission scheme, CJT may be prioritized over NCJT, and single-DCI-based joint transmission may be prioritized over multi-DCI-based joint transmission.

In order to enable CJT/NCJT from a plurality of TRPs/sub-cells toward the UE, the base station needs to recognize the best TRP/sub-cell and the best beam for each TRP/sub-cell.

However, a method for the base station to recognize the best TRP/sub-cell and the best beam for each TRP/sub-cell has not been sufficiently studied. Specifically, insufficient study has been conducted on non-group-based beam reporting and group-based beam reporting.

In a case where these studies are insufficient, appropriate communication between the TRP/sub-cell and the UE cannot be performed, which may lead to a decrease in communication throughput.

Therefore, the present inventors have conceived a method for solving the above problems.

Hereinafter, embodiments according to the present disclosure will be described in detail with reference to the drawings. The radio communication method according to each embodiment may be applied independently, or may be applied in combination with others.

In the present disclosure, "A/B" and "at least one of A or B" may be interchangeably used. Furthermore, in the present disclosure, "A/B/C" may mean "at least one of A, B, or C".

In the present disclosure, notify, activate, deactivate, instruct (or indicate), select, configure, update, determine, and the like may be interchangeably used. In the present disclosure, support, control, can control, operate, can operate, and the like may be interchangeably used.

In the present disclosure, radio resource control (RRC), an RRC parameter, an RRC message, a higher layer parameter, a field, an information element (IE), a setting, and the like may be interchangeably used. In the present disclosure, a Medium Access Control control element (MAC control element (CE)), an update command, an activation/deactivation command, and the like may be interchangeably used.

In the present disclosure, the higher layer signaling may be, for example, any one of Radio Resource Control (RRC) signaling, Medium Access Control (MAC) signaling, broadcast information, other messages (a message from a core network, such as a Positioning Protocol (for example, NR Positioning Protocol A (NRPPa) or LTE Positioning Protocol (LPP)) message), or the like, or a combination thereof.

In the present disclosure, the MAC signaling may use, for example, the MAC control element (MAC CE), a MAC protocol data unit (PDU), or the like. The broadcast information may be, for example, a Master Information Block (MIB), a System Information Block (SIB), Remaining Minimum System Information (RMSI), Other System Information (OSI), or the like.

In the present disclosure, the physical layer signaling may be, for example, Downlink Control Information (DCI), Uplink Control Information (UCI), or the like.

In the present disclosure, an index, an identifier (ID), an indicator, a resource ID, and the like may be interchangeably used. In the present disclosure, a sequence, a list, a set, a group, a cohort, a cluster, a subset, and the like may be interchangeably used.

In the present disclosure, an SSB, a CSI-RS, a TRS, an SRS, a reference signal (RS), a panel, a UE panel, a panel group, a beam, a beam group, a precoder, an uplink (UL) transmission entity, a transmission and reception point (transmission/reception point (TRP)), a base station, spatial relation information (SRI), a spatial relation, an SRS resource indicator (SRI), a control resource set (CORESET), a physical downlink shared channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a physical uplink control channel (PUCCH) group, or a PUCCH resource group), a resource (for example, a reference signal resource and an SRS resource), a resource set (for example, a reference signal resource set), a CORESET pool, a downlink transmission configuration indication state (TCI state) (DL TCI state), an uplink TCI state (UL TCI state), a unified TCI state, a common TCI state, a quasi-co-location (QCL), QCL assumption, and the like may be interchangeably used.

Furthermore, the spatial relation information Identifier (ID) (TCI state ID) and the spatial relation information (TCI state) may be interchangeably used. The "spatial relation information" may be interchangeable with a "set of spatial relation information", "one or a plurality of pieces of spatial relation information", or the like. A TCI state and TCI may be interchangeably used.

In the present disclosure, drop, stop, cancel, puncture, rate match, postpone, do not transmit, and the like may be interchangeably used.

In the present disclosure, a CMR, a CRI, an SSBRI, a beam, a beam index, and the like may be interchangeably used.

In the present disclosure, a CMR group, a TRP, a cell, a sub-cell, and the like may be interchangeably used.

In the present disclosure, L1-RSRP, L1-SINR, L1-RSRQ, L3-RSRP (Layer 3 Reference Signal Received Power), L3-SINR ( Layer 3 Signal to Interference plus Noise Ratio), L3-RSRQ (Layer 3 Reference Signal Received Quality), filtered L1 measurement, enhanced L1 measurement, and the like may be interchangeably used.

In the present disclosure, a case where a higher layer parameter (for example, an RRC parameter "groupBasedBeamReporting" for group-based beam reporting) included in CSI reporting configuration information is configured to be disabled, a case where a higher layer parameter (for example, an RRC parameter "groupBasedBeamReporting" for group-based beam reporting) included in CSI reporting configuration information is not configured to be enabled, a case where group-based beam reporting is not configured, a case where non-group-based beam reporting is configured, and the like, may be interchangeably used.

In the present disclosure, a case where a higher layer parameter (for example, an RRC parameter "groupBasedBeamReporting" for group-based beam reporting) included in CSI reporting configuration information is configured to be enabled, a case where a higher layer parameter (for example, an RRC parameter "groupBasedBeamReporting" for group-based beam reporting) included in CSI reporting configuration information is not configured to be disabled, a case where group-based beam reporting is configured, a case where non-group-based beam reporting is not configured, and the like, may be interchangeably used.

In the present disclosure, a CSI-IM resource, a non-zero power (NZP)-interference measurement resource (IMR), a zero power (ZP)-interference measurement resource (IMR), a ZP CSI-RS resource, and the like may be interchangeably used.

### (Radio Communication Method)

### <First Embodiment>

A first embodiment relates to non-group-based beam reporting.

### [Embodiment 1.1]

In a case where non-group-based beam reporting is configured, a plurality of groups (for example, X CMR groups) of a plurality of CMRs (SSBs/CSI-RSs) may be configured for CSI resource configuration for channel measurement for L1-RSRP/L1-SINR-based beam measurement/reporting. Each CMR group may include the same number of CMRs. For example, each CMR group may include Y CMRs (Y CMRs may be configured for each CMR group). The UE may select and report M CMR groups, each CMR group including N CMRs. In other words, the UE may select and report M × N CMRs from the plurality of CMRs in the M CMR groups.

The X, Y, M, and N may be configured by RRC signaling or may be defined by specifications. Furthermore, the maximum values of the X, Y, M, and N may be defined by specifications or may be reported to the base station by UE capability information.

One CMR group may mean one TRP/sub-cell. In other words, the CMR group, the TRP, and the sub-cell may be interchangeably used. The base station may configure beam measurement for a plurality of TRPs/sub-cells (X TRPs/subcells), each TRP/sub-cell including a plurality of beams (Y beams). The UE may select and report the best N beams for each of the best M TRPs/sub-cells.

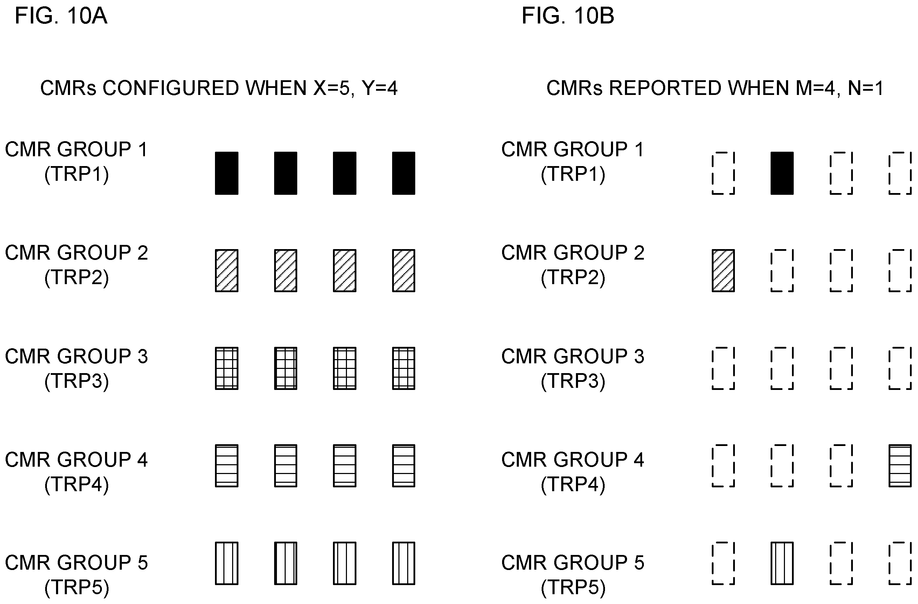

FIGS. 10A and 10B are diagrams illustrating examples of the CMR group and the CMR. In FIG. 10A, five CMR groups (CMR groups 1 to 5) are configured, and the same number (four, in this example) of CMRs are configured for each CMR group.

The UE selects and reports one or more CMR groups and one or more CMRs from a plurality of CMR groups and a plurality of CMRs in FIG. 10A. In FIG. 10B, the UE selects and reports four CMR groups (CMR groups 1, 2, 4, and 5) from five CMR groups (CMR groups 1 to 5) in FIG. 10A, and selects and reports one CMR for each CMR group from four CMRs included in each of the four CMR groups (CMR groups 1, 2, 4, and 5).

In the configuration of the CMR, the CMR group ID may be explicitly configured. In this case, the CMR group ID may be associated with the ID of the corresponding TRP/sub-cell.

In the configuration of the CMR, the CMR group ID may not be explicitly configured. In this case, the CMR group may be identified by the ID of the corresponding TRP/sub-cell.

CMRs included in different CMR groups may be simultaneously transmitted via the network.

According to Embodiment 1.1 described above, the UE can appropriately select and report the CMR.

### [Embodiment 1.2]

In a case where non-group-based beam reporting is configured, a plurality of groups (for example, X CMR groups) of a plurality of CMRs (SSBs/CSI-RSs) may be configured for CSI resource configuration for channel measurement for L1-RSRP/L1-SINR-based beam measurement/reporting. Each CMR group may include a different number of CMRs. The maximum number of CMRs configured for each CMR group may be defined by specifications or may be determined based on UE capability. The maximum number of CMRs configured across a plurality of/all CMR groups may be defined by specifications or may be determined based on UE capability. The UE may select and report K CMRs from among all configured CMR groups (in other words, across all the configured CMR groups). The maximum number of CMRs reported for each CMR group may be defined by specifications, may be configured by RRC signaling, or may be determined based on UE capability. The maximum number of CMRs reported across a plurality of/all CMR groups may be defined by specifications, may be configured by RRC signaling, or may be determined based on UE capability.

The X and K may be configured by RRC signaling or may be defined by specifications. Furthermore, the maximum values of the X and K may be defined by specifications or may be reported to the base station by UE capability information.

One CMR group may mean one TRP. In other words, the CMR group and the TRP may be interchangeably used. In a case where the number of beams configured for each TRP is different, for the reporting setting, the base station may configure only the total number of reported CMRs.

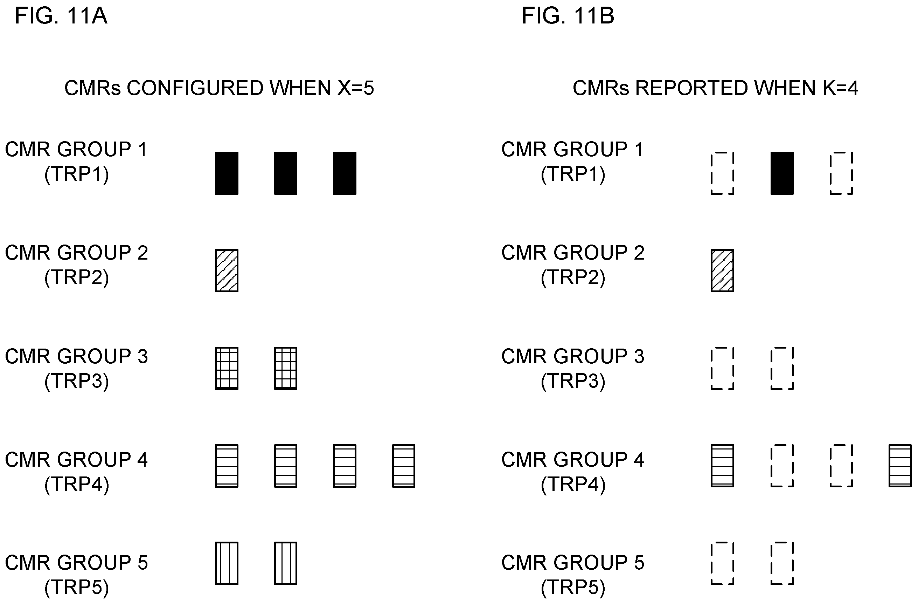

FIGS. 11A and 11B are diagrams illustrating examples of the CMR group and the CMR. In FIG. 11A, five CMR groups (CMR groups 1 to 5) are configured, and one or more CMRs are configured for each CMR group. The number of CMRs configured for each CMR group may be the same or different.

The UE selects and reports one or more CMR groups and one or more CMRs from a plurality of CMR groups and a plurality of CMRs configured in FIG. 11A. In FIG. 11B, the UE selects and reports three CMR groups (CMR groups 1, 2, and 4) from five CMR groups (CMR groups 1 to 5) configured in FIG. 11A, and selects and reports a total of four CMRs from among a plurality of (eight, in this example) CMRs included in the three CMR groups (CMR groups 1, 2, and 4).

In the configuration of the CMR, the CMR group ID may be explicitly configured. In this case, the CMR group ID may be associated with the ID of the corresponding TRP.

In the configuration of the CMR, the CMR group ID may not be explicitly configured. In this case, the CMR group may be identified by the ID of the corresponding TRP.

According to Embodiment 1.2 described above, the UE can appropriately select and report the CMR.

### [Embodiment 1.3A]

In a case where non-group-based beam reporting is configured, a plurality of groups (for example, X CMR groups) of a plurality of CMRs (SSBs/CSI-RSs) may be configured for CSI resource configuration for channel measurement for L1-RSRP/L1-SINR-based beam measurement/reporting. Each CMR group may include the same number of CMRs. For example, Y CMRs may be configured for each CMR group (each CMR group may include Y CMRs). The UE may select and report K CMRs from among all configured CMR groups (in other words, across all the configured CMR groups). The maximum number of CMRs reported for each CMR group may be defined by specifications, may be configured by RRC signaling, or may be determined based on UE capability. The maximum number of CMRs reported across a plurality of/all CMR groups (the maximum value of K) may be defined by specifications, may be configured by RRC signaling, or may be determined based on UE capability.

The X, Y, and K may be configured by RRC signaling or may be defined by specifications. Furthermore, the maximum values of the X, Y, and K may be defined by specifications or may be reported to the base station by UE capability information.

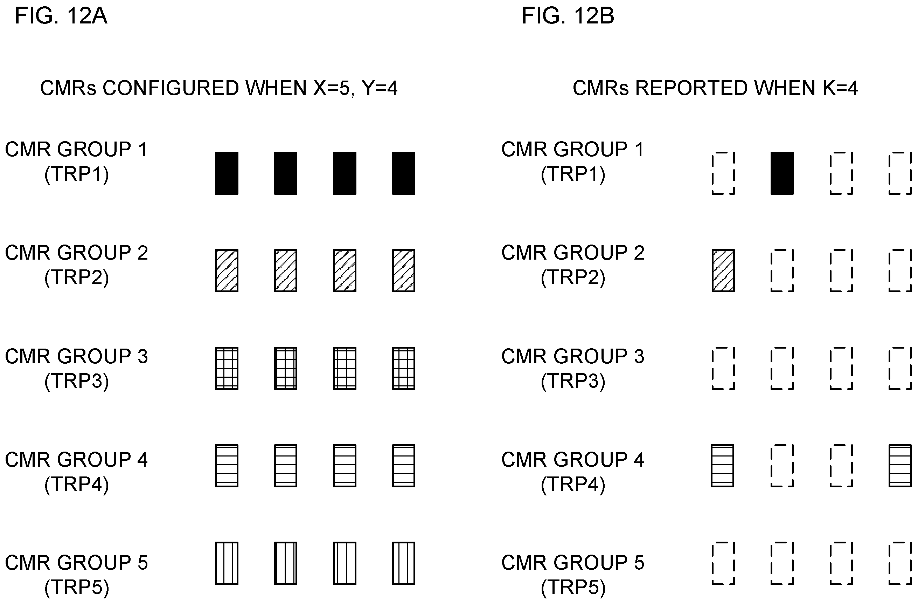

FIGS. 12A and 12B are diagrams illustrating examples of the CMR group and the CMR. In FIG. 12A, five CMR groups (CMR groups 1 to 5) are configured, and the same number (four, in this example) of CMRs are configured for each CMR group.

The UE selects and reports one or more CMR groups and one or more CMRs from a plurality of CMR groups and a plurality of CMRs configured in FIG. 12A. In FIG. 12B, the UE selects and reports three CMR groups (CMR groups 1, 2, and 4) from five CMR groups (CMR groups 1 to 5) configured in FIG. 12A, and selects and reports a total of four CMRs from among a plurality of (twelve, in this example) CMRs included in the three CMR groups (CMR groups 1, 2, and 4).

According to Embodiment 1.3A described above, the UE can appropriately select and report the CMR.

### [Embodiment 1.3B]

In a case where non-group-based beam reporting is configured, a plurality of groups (for example, X CMR groups) of a plurality of CMRs (SSBs/CSI-RSs) may be configured for CSI resource configuration for channel measurement for L1-RSRP/L1-SINR-based beam measurement/reporting. Each CMR group may include a different number of CMRs. The UE may select and report M CMR groups, each CMR group including N CMRs. In other words, the UE may select and report M × N CMRs from the plurality of CMRs in the M CMR groups. The maximum number of CMRs (N) configured for each CMR group may be defined by specifications or may be determined based on UE capability. The maximum number of CMRs (M × N) configured across a plurality of/all CMR groups may be defined by specifications or may be determined based on UE capability. N may be equal to or less than the number of CMRs configured in a CMR group having the smallest number of configured CMRs among the configured CMR groups.

The X, M, and N may be configured by RRC signaling or may be defined by specifications. Furthermore, the maximum values of the X, M, and N may be defined by specifications or may be reported to the base station by UE capability information.

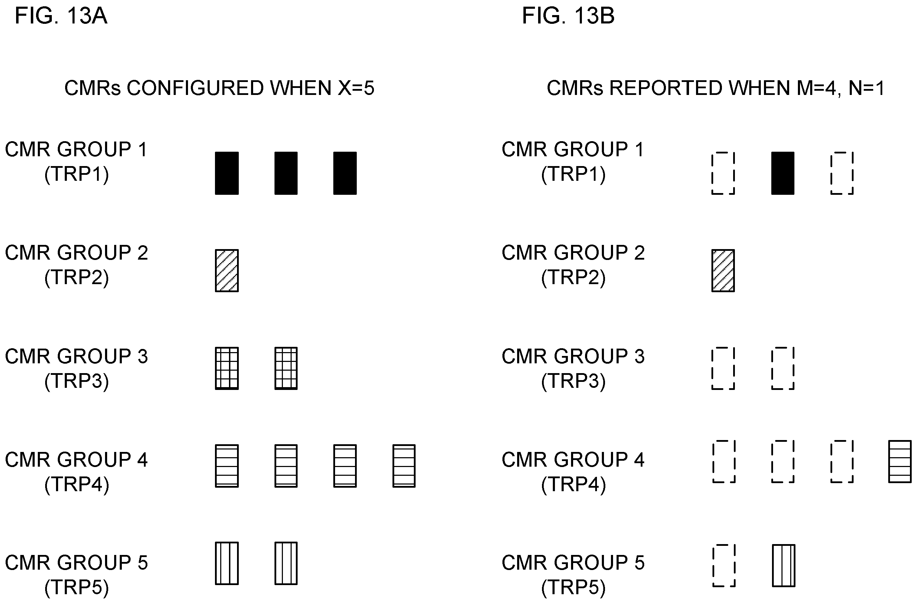

FIGS. 13A and 13B are diagrams illustrating examples of the CMR group and the CMR. In FIG. 13A, five CMR groups (CMR groups 1 to 5) are configured, and one or more CMRs are configured for each CMR group. The number of CMRs configured for each CMR group may be the same or different.

The UE selects and reports one or more CMR groups and one or more CMRs from a plurality of CMR groups and a plurality of CMRs configured in FIG. 13A. In FIG. 13B, the UE selects and reports four CMR groups (CMR groups 1, 2, 4, and 5) from five CMR groups (CMR groups 1 to 5) configured in FIG. 13A, and selects and reports one CMR for each CMR group from among a plurality of (ten, in this case) CMRs included in the four CMR groups (CMR groups 1, 2, 4, and 5).

According to Embodiment 1.3B described above, the UE can appropriately select and report the CMR.

### [Embodiment 1.4]

A restriction may be provided for at least one of CMRs configured for each CMR group (in other words, within the same CMR group) or CMRs configured for different CMR groups. The restriction may depend on at least one of UE capability reporting and configuration of a network.

A restriction on the type/kind of reference signal may be provided. The restriction may be either Option 1 or Option 2 below.
- Option 1: Types of reference signals for a plurality of CMRs in all CMR groups are the same.
- Option 2: Types of reference signals for a plurality of CMRs in one CMR group are the same, and types of reference signals for the plurality of CMRs in different CMR groups are the same or different.

Regarding Option 1, for example, in one report setting, only SSBs or only CSI-RSs may be used as reference signals for a plurality of CMRs in all CMR groups.

Regarding Option 2, for example, only one of an SSB or a CSI-RS may be used as a reference signal for a plurality of CMRs in a first CMR group, and in this case, only one of an SSB or a CSI-RS may be used as a reference signal for a plurality of CMRs in a second CMR group.

A restriction on a physical cell ID (physical cell identifier (PCI)) may be provided. The restriction may be at least one of Options 1 to 3 below.
- Option 1: A plurality of CMRs in one CMR group are associated with the same PCI.
- Option 2: For intra-cell, a plurality of CMRs in different CMR groups are associated with the same PCI.
- Option 3: For inter-cell, a plurality of CMRs in different CMR groups are associated with the same or different PCIs.

A restriction on a QCL source RS may be provided. In a case where a plurality of CSI-RSs are configured as a plurality of CMRs, QCL source RSs of the plurality of CMRs within one CMR group may be restricted to one same SSB.

A restriction on timing advance (TA)/timing advance group (TAG) may be provided. The restriction may be either Option 1 or Option 2 below.
- Option 1: A plurality of CMRs in one CMR group (alternatively, a plurality of TCI states associated with a plurality of CMRs in one CMR group) are associated with the same TA/TAG. A plurality of CMRs in different CMR groups (alternatively, a plurality of TCI states associated with a plurality of CMRs in different CMR groups) are associated with the different TAs/TAGs.
- Option 2: All CMRs in different CMR groups (alternatively, a plurality of TCI states associated with a plurality of CMRs in different CMR groups) are associated with the same TA/TAG.

A restriction on a TA offset value (for example, n-TimingAdvanceOffset) may be provided. The restriction may be at least one of Options 1 to 3 below.
- Option 1: One TA offset value is configured for each CMR group. In this case, the TA offset value may be the same or different among a plurality of CMR groups.
- Option 2: One TA offset value is configured for all CMR groups. In this case, the TA offset value is the same or common among all CMR groups.
- Option 3: For inter-cell, one TA offset value is configured for each PCI and/or each TAG.

A restriction on a DL reference timing may be provided. The restriction may be at least one of Options 1 to 3 below.
- Option 1: One DL reference timing is configured or supported for each CMR group. In this case, the DL reference timing may be the same or different among a plurality of CMR groups.
- Option 2: One DL reference timing is configured or supported for all CMR groups. In this case, the DL reference timing is the same or common among all CMR groups.
- Option 3: For inter-cell, one DL reference timing is configured or supported for each PCI and/or for each TAG.

A restriction on a DL pathloss reference signal (PL-RS) may be provided. The UE may not expect that more than one SSB/CSI-RS is configured as a PL-RS from one CMR group.

A restriction on a DL radio link monitoring reference signal (RLM-RS) may be provided. The UE may not expect that more than one SSB/CSI-RS is configured as an RLM-RS from one CMR group.

A restriction on a DL beam failure detection reference signal (BFD-RS) may be provided. The UE may not expect that more than one SSB/CSI-RS is configured as a BFD-RS from one CMR group.

### [Embodiment 1.5]

In a case where the L1-SINR is configured as a report quantity, the configuration of the ZP-IMR may be at least one of Options 1-1 to 1-3 below.
- Option 1-1: A ZP-IMR and a CMR are mapped one-to-one.
- Option 1-2: One commonly configured ZP-IMR is configured for all CMRs.
- Option 1-3: One commonly configured ZP-IMR is configured for each CMR group.

In the above-described Option 1-1, one ZP-IMR may be configured for each CMR.

In the above-described Option 1-3, one commonly configured ZP-IMR may be applied to a plurality of CMRs in one CMR group, and the same/different ZP-IMRs may be respectively applied to a plurality of CMRs in different CMR groups.

Whether or not L1-SINR measurement/reporting is supported and whether or not the above-described Options 1-1, 1-2, and 1-3 are supported may depend on at least one of UE capability or configuration by a network.

In a case where the L1-SINR is configured as a report quantity, the configuration of the NZP-IMR may be at least one of Options 2-1 to 2-3 below.
- Option 2-1: An NZP-IMR and a CMR, or an NZP-IMR and a ZP-IMR are mapped one-to-one.
- Option 2-2: One commonly configured NZP-IMR is configured for all CMRs or between an NZP-IMR and a ZP-IMR.
- Option 2-3: One commonly configured NZP-IMR is configured for each CMR group.

In the above-described Option 2-1, one NZP-IMR may be configured for each CMR.

In the above-described Option 2-3, one commonly configured NZP-IMR may be applied to a plurality of CMRs in one CMR group, and the same/different NZP-IMRs may be respectively applied to a plurality of CMRs in different CMR groups.

Whether or not the configuration of the NZP-IMR for the L1-SINR is supported and whether or not the above-described Options 2-1, 2-2, and 2-3 are supported may depend on at least one of UE capability or configuration by a network.

### [Embodiment 1.6]

The UE may report, in one CSI report, at least one of a beam index (CRI/SSBRI) indication, a CMR group ID indication, or a per-beam L1-RSRP/L1-SINR value to a base station. The CSI report may be generated in accordance with either Option 1-1 or 1-2.

### [Option 1-1]

All configured CMRs may be indexed across all CMR groups. One beam index corresponding to one CMR may be indicated by using ceil(log₂(MAX_allgroup)) bits. In the present disclosure, MAX_allgroup may mean the total number of CMRs across CMR groups. In the present disclosure, ceil(A) may mean a ceiling function of A. In the present disclosure, log₂(B), ceil(log₂(B)), and the like may be interchangeably used. ceil(log₂(MAX_allgroup)) means the number of bits of one beam index corresponding to one CMR in a case where all CMRs are indexed across all CMR groups.

The UE may generate a CSI report using all beam indexes corresponding to all selected/reported CMRs.

For example, the UE may report M × N beam indexes corresponding to M × N CMRs using M × N × ceil(log₂(MAX_allgroup)) bits in Embodiments 1.1 and 1.3B.

For example, the UE may report K beam indexes corresponding to K CMRs using K × ceil(log₂(MAX_allgroup)) bits in Embodiments 1.2 and 1.3A.

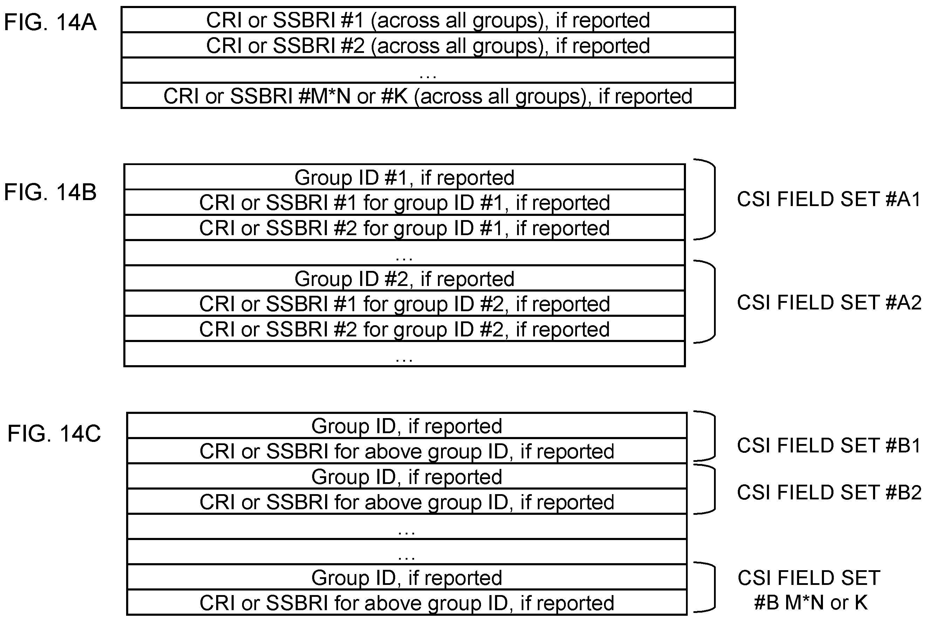

FIG. 14A is a diagram illustrating an example of a CSI report generated in accordance with Option 1-1. FIG. 14A illustrates mapping of CSI fields included in one CSI report for CRI/RSRP or SSBRI/RSRP reporting. One CSI field may include one beam index (CRI/SSBRI) corresponding to one selected/reported CMR. The CSI report may include beam indexes corresponding to CMRs #1 to #M × N or CMR #K.

### [Option 1-2]

A CMR configured for each CMR group may be indexed. One beam index corresponding to one CMR in a certain CMR group may be indicated by using ceil(log₂(MAX_pergroup)) bits. In the present disclosure, MAX_pergroup may mean the number of CMRs in a certain CMR group. One CMR group ID may be indicated by using ceil(log₂(total number of CMR groups)) bits. In this case, a CSI report may be generated in accordance with the following Option 1-2A or Option 1-2B.

The UE may generate the CSI report for each CMR group using the beam index corresponding to the selected/reported CMR and the CMR group ID including the CMR (Option 1-2A).

FIG. 14B is a diagram illustrating an example of a CSI report generated in accordance with Option 1-2A. FIG. 14B illustrates mapping of CSI fields included in one CSI report for CRI/RSRP or SSBRI/RSRP reporting. One CSI field may include one CMR group ID or one beam index (CRI/SSBRI) corresponding to one CMR. The CSI report may include one or more CSI field sets (for example, CSI field sets #A1 and #A2). One CSI field set may include one CMR group ID and beam indexes corresponding to one or more CMRs in the corresponding CMR group. One CSI field set may correspond to one selected/reported CMR group. The number of CSI field sets may be the same as the number of selected/reported CMR groups.

The UE may generate a CSI report for each beam index and for each CMR group by using a beam index corresponding to a selected/reported CMR and the ID of the CMR group including corresponding CMRs (Option 1-2B).

FIG. 14C is a diagram illustrating an example of a CSI report generated in accordance with Option 1-2B. FIG. 14C illustrates mapping of CSI fields included in one CSI report for CRI/RSRP or SSBRI/RSRP reporting. One CSI field may include one CMR group ID or one beam index (CRI/SSBRI) corresponding to one CMR. The CSI report may include one or more CSI field sets (for example, CSI field sets #B1, #B2, ...). One CSI field set may include one CMR group ID and a beam index corresponding to one CMR in the corresponding CMR group. One CSI field set may correspond to one selected/reported CMR in one selected/reported CMR group, may correspond to one selected/reported CMR, or may correspond to one selected/reported CMR group. The number of CSI field sets may be the same as the number of selected/reported CMRs.

For the quantization of the L1-RSRP/L1-SINR value for each beam, the following Option 2-A or 2-B may be used. In the present disclosure, "strong or stronger", "large or larger", "high or higher", "good or better", and the like may be interchangeably used. In the present disclosure, "strongest", "largest", "highest", "best" and the like may be interchangeably used.

### [Option 2-A]

Among all measurement values (L1-RSRP/L1-SINR values) for all CMR groups, the strongest value may be quantized with 7 bits (or another bit size having a high quantization resolution), and the remaining values may be differentially quantized with 4 bits (or another bit size having a low quantization resolution).

In the CSI report, a beam having the largest L1-RSRP/L1-SINR value from among all CMRs may be mapped or disposed prior to other beams.

### [Option 2-B]

Among all measurement values (L1-RSRP/L1-SINR values) for one CMR group, the strongest value may be quantized with 7 bits (or another bit size having a high quantization resolution), and the remaining values in the CMR group may be differentially quantized with 4 bits (or another bit size having a low quantization resolution).

In the CSI report, a beam having the largest L1-RSRP/L1-SINR value from among CMRs for each CMR group may be mapped or disposed prior to other beams included in the same CMR group.

In the CSI report, the L1-RSRP/L1-SINR value may be mapped or disposed after the corresponding beam index. In this case, any of the following Options 3-A to 3-C may be used.

### [Option 3-A]

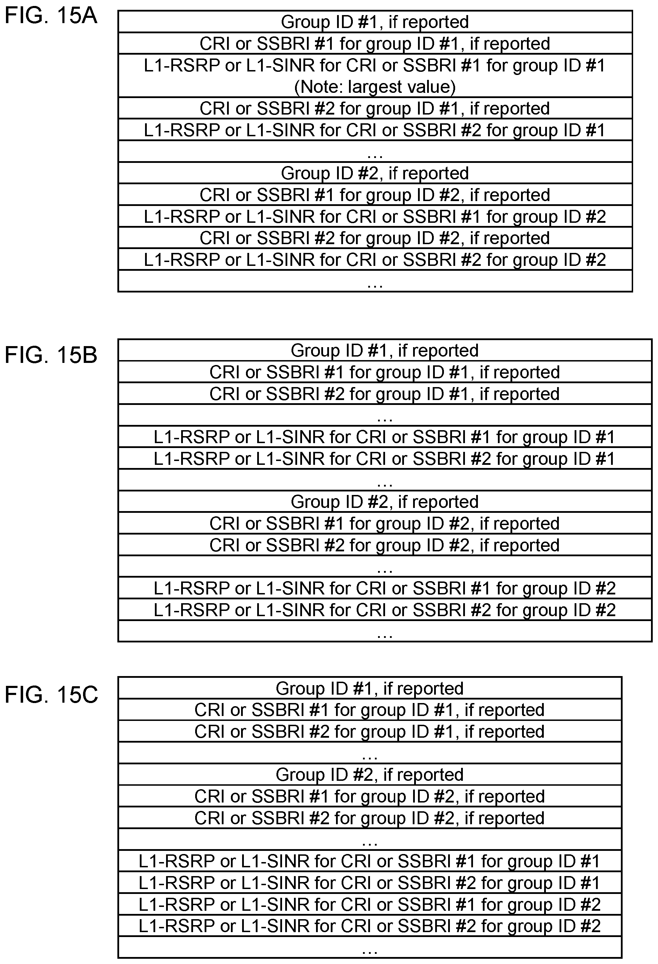

As illustrated in FIG. 15A, the L1-RSRP/L1-SINR value for each beam may be mapped or disposed immediately after the corresponding beam index.

### [Option 3-B]

As illustrated in FIG. 15B, the L1-RSRP/L1-SINR value for a beam for each CMR group may be mapped or disposed after the beam index for each CMR group.

### [Option 3-C]

As illustrated in FIG. 15C, the L1-RSRP/L1-SINR values for all beams may be mapped or disposed after all beam indexes.

According to Embodiment 1.6 described above, the size and mapping of the CSI report can be appropriately determined.

### [Variation]

At least one of the number of CMR groups (M), the number of CMRs for each CMR group (N), or the number of CMRs across CMR groups (K) may not be configured by a network. In other words, the UE may determine at least one of M, N, or K.

At least one of the maximum number of CMR groups (M'), the maximum number of CMRs for each CMR group (N'), or the maximum number of CMRs across CMR groups (K') may be configured by a network. The UE may determine at least one of M satisfying M ≤ M', N satisfying N ≤ N', and K satisfying K ≤ K'.

The size of the CSI report may be variable. In order for the network and the UE to have a common understanding of the contents of the CSI report, the following enhancement may be performed:
- A two-part CSI report is supported, wherein a first part (CSI part 1) has a fixed size and indicates the interpretation and size of a second part (CSI part 2).

For example, the UE may report, in the first part, the number of beams reported by using ceil(log₂(MAX_allgroup)) bits or ceil(log₂(K')) bits. The size and content of the second part may be determined by the first part. According to Embodiment 1.6, the UE may report, in the second part, at least one of a beam index (CRI/SSBRI) indication, a CMR group ID indication, or a per-beam L1-RSRP/L1-SINR value.

For example, the UE may report, in the first part, the number of CMR groups using ceil(log₂(number of CMR groups)) bits or ceil(log₂(M')) bits. The UE may report, in the first part, the number of CMRs for each CMR group using ceil(log₂(number of CMRs for each CMR group)) bits or ceil(log₂(N')) bits. The size and content of the second part may be determined by the first part. According to Embodiment 1.6, the UE may report, in the second part, at least one of a beam index (CRI/SSBRI) indication, a CMR group ID indication, or a per-beam L1-RSRP/L1-SINR value.

Based on RRC configuration, the MAC CE may activate, indicate, or update at least one of the following.
- One or more CMR groups for beam measurement
- One or more PCIs of one or more CMR groups for beam measurement
- The number of selected/reported CMR groups (M), the number of CMRs selected/reported for each CMR group (N), or the number of CMRs selected/reported across CMR groups (K)
- Configuration of ZP-IMR/NZP-IMR
- One or more restrictions according to Embodiment 1.4

The MAC CE may include a CMR group ID, a TRP ID, and a sub-cell ID.

In a case where event-based beam reporting/updating is configured, a plurality of beams reported by the UE (alternatively, a plurality of beams associated with a plurality of TCI states) may be applied to a plurality of channels/RSs in the configured or defined corresponding DL/UL associated with the corresponding CMR group.

In order to support the above application, a restriction may be provided such that up to one beam is reported for each CMR group. Alternatively, in a case where a plurality of beams are reported for each group, a specific rule may be used to select a beam to be applied to channel/RS for the corresponding CMR group. The rule may be, for example, using the first beam among the plurality of beams or using a beam having a lower/higher ID.

For each TRP/CMR group, RLM-RS/BFD-RS/PL-RS may be updated as a reporting beam for the corresponding CMR group.

According to the first embodiment described above, the non-group-based beam reporting can be appropriately controlled.

### <Second Embodiment>

A second embodiment relates to the group-based beam reporting.

### [Embodiment 2.1]

In a case where a plurality of groups (for example, X CMR groups) of a plurality of CMRs (SSBs/CSI-RSs) are configured, the group-based beam reporting may be supported/configured. Each CMR group may include the same number of CMRs (for example, Y CMRs), or each CMR group may include a different number of CMRs. The UE may select/report P joint report groups.

Each joint report group includes a plurality of CMR groups, and may include Q (Q satisfies Q ≤ X) CMRs across the plurality of CMR groups.

In each joint report group, the number of CMRs selected/reported from one CMR group may be at most one.

The UE may simultaneously receive CMRs in one joint report group. The network may simultaneously transmit CMRs in different CMR groups (the network may simultaneously transmit RSs in a plurality of CMRs respectively included in a plurality of CMR groups).

The X, Y, P, and Q may be configured by RRC signaling or may be defined by specifications. Furthermore, the maximum values of the X, Y, P, and Q may be defined by specifications or may be reported to the base station by UE capability information.

The UE may report capability information indicating support for group-based beam reporting for a plurality of CMR groups.

In the configuration of the CMR, the CMR group ID may be explicitly configured. In this case, the CMR group ID may be associated with the ID of the corresponding TRP/sub-cell.

In the configuration of the CMR, the CMR group ID may not be explicitly configured. In this case, the CMR group may be identified by the ID of the corresponding TRP/sub-cell.

As a restriction on the configuration of CMR, the following Option 1 or Option 2 may be provided:
- Option 1: One CMR may be selected/reported in only one joint report group. In other words, the same CMR may not be selected/reported across different joint report groups.
- Option 2: The same CMR may be selected/reported across different joint report groups.

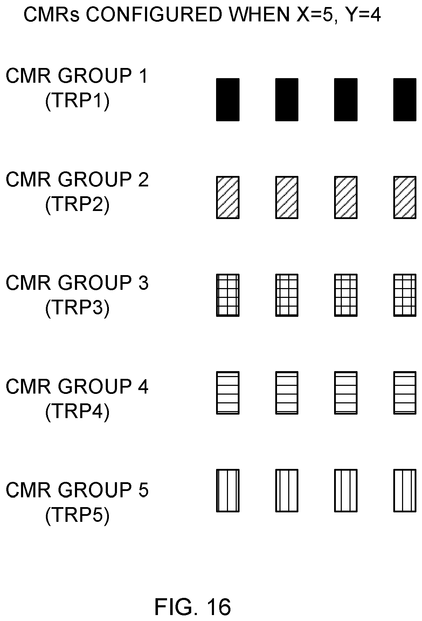

FIG. 16 is a diagram illustrating an example of the CMR group and the CMR. In FIG. 16, five CMR groups (CMR groups 1 to 5) are configured, and the same number (four, in this example) of CMRs are configured for each CMR group.

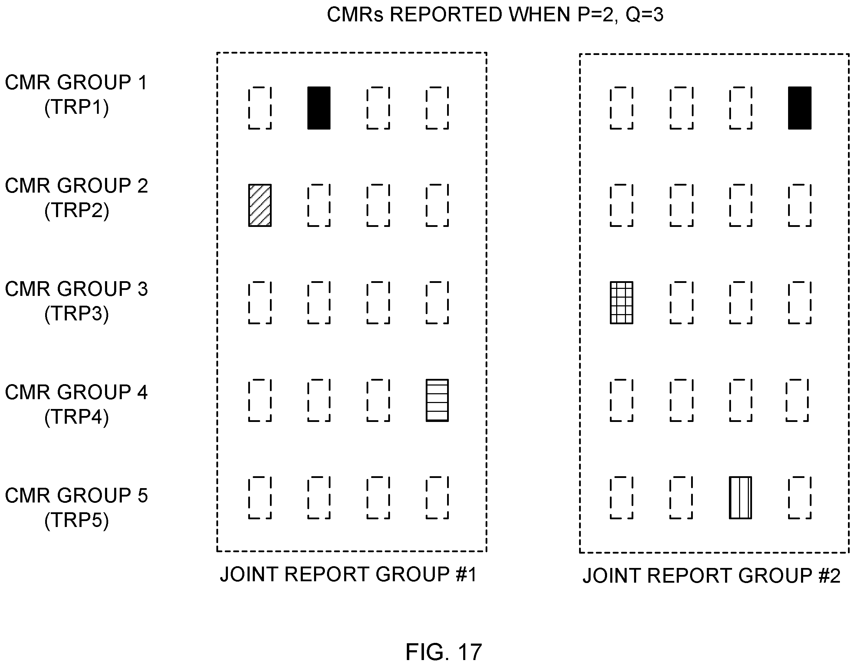

FIG. 17 is a diagram illustrating an example of the CMR group and the CMR reported by the UE in the above-described Option 1. In FIG. 17, the UE reports two joint report groups. Each joint report group includes three CMR groups selected from five CMR groups (CMR groups 1 to 5) in FIG. 16. The UE selects/reports one CMR per CMR group from four CMRs configured for each of three CMR groups in a first joint report group (for example, joint report group #1). Furthermore, the UE selects/reports one CMR per CMR group from four CMRs configured for each of three CMR groups in a second joint report group (for example, joint report group #2). In FIG. 17, the CMR in the first joint report group (for example, joint report group #1) and the CMR in the second joint report group (for example, joint report group #2) are different.

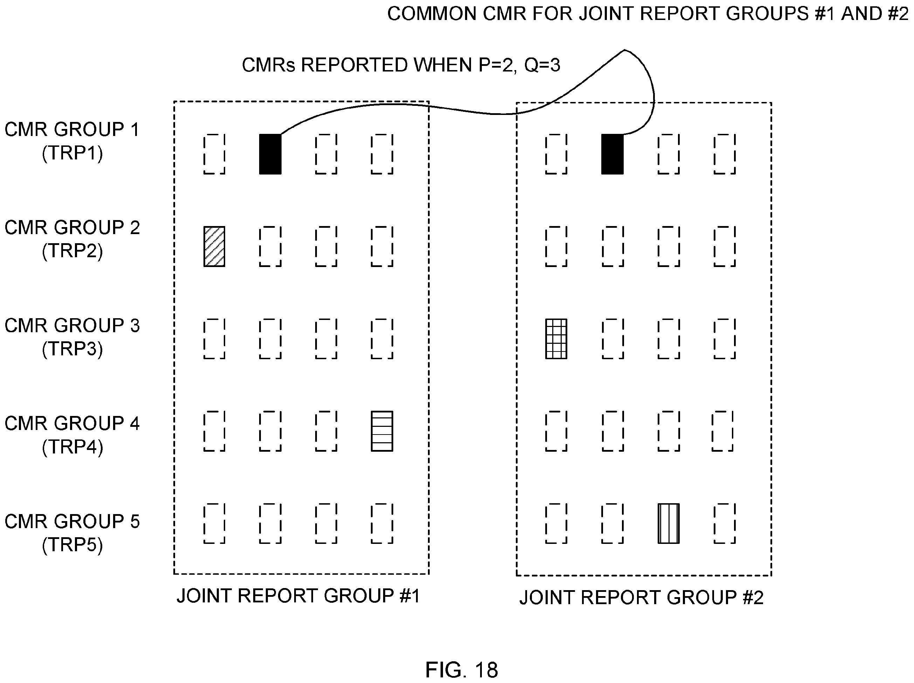

FIG. 18 is a diagram illustrating an example of the CMR group and the CMR reported by the UE in the above-described Option 2. In FIG. 18, the UE reports two joint report groups. Each joint report group includes three CMR groups selected from five CMR groups (CMR groups 1 to 5) in FIG. 16. The UE selects/reports one CMR per CMR group from four CMRs configured for each of three CMR groups in a first joint report group (for example, joint report group #1). Furthermore, the UE selects/reports one CMR per CMR group from four CMRs configured for each of three CMR groups in a second joint report group (for example, joint report group #2). In FIG. 18, the first joint report group (for example, joint report group #1) and the second joint report group (for example, joint report group #2) include a common CMR (for example a CMR in CMR group #1).

According to Embodiment 2.1 described above, the UE can appropriately select and report the CMR.

### [Embodiment 2.2]

In a case where a plurality of groups (for example, X CMR groups) of a plurality of CMRs (SSBs/CSI-RSs) are configured, the group-based beam reporting may be supported/configured. Each CMR group may include the same number of CMRs (for example, Y CMRs), or each CMR group may include a different number of CMRs. The UE may select/report P₁ first joint report groups, P₂ second joint report groups, P₃ third joint report groups, and the like.

The number of selected/reported CMRs may be determined for each joint report group. For example, the number of CMRs in one first joint report group may be Q₁, the number of CMRs in one second joint report group may be Q₂, or the number of CMRs in one third joint report group may be Q₃.

In each joint report group, the number of CMRs selected/reported from one CMR group may be at most one.

The UE may simultaneously receive CMRs in one joint report group. The network may simultaneously transmit CMRs in different CMR groups.

The X, Y, P₁, Q₁, P₂, Q₂, P₃, and Q₃ may be configured by RRC signaling or may be defined by specifications. Furthermore, the maximum values of the X, Y, P₁, Q₁, P₂, Q₂, P₃, and Q₃ may be defined by specifications or may be reported to the base station by UE capability information.

As a restriction on the configuration of CMR, the following Option 1 or Option 2 may be provided:
- Option 1: One CMR may be selected/reported in only one joint report group (in other words, the same CMR may not be selected/reported across different joint report groups).
- Option 2: The same CMR may be selected/reported across different joint report groups.

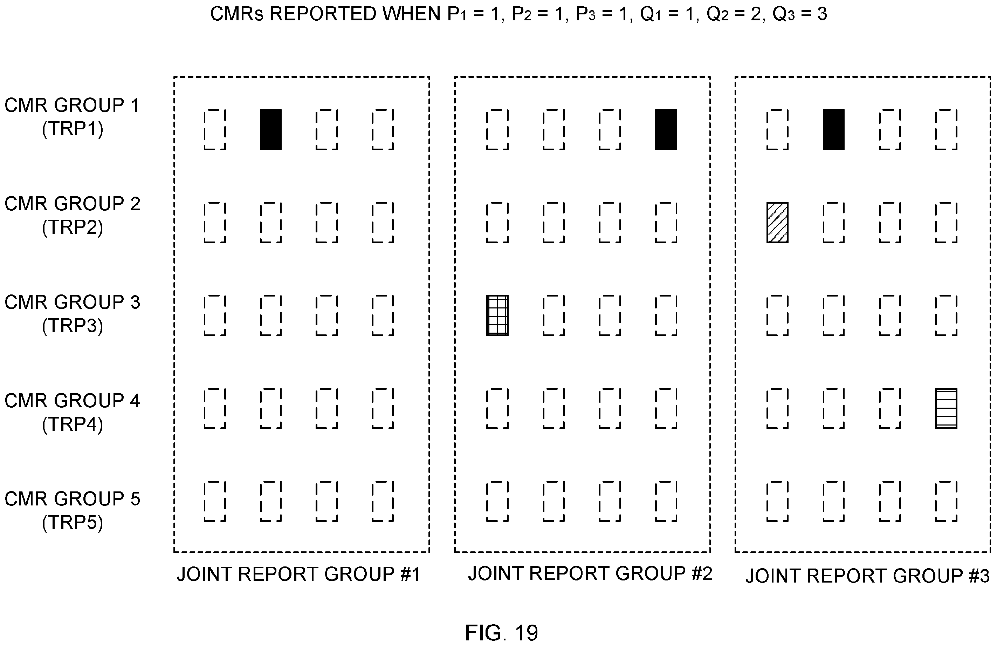

FIG. 19 is a diagram illustrating an example of the CMR group and the CMR reported by the UE. In FIG. 19, P₁ = 1, P₂ = 1, and P₃ = 1. That is, in FIG. 19, the UE reports one first joint report group, one second joint report group, and one third joint report group. Furthermore, in FIG. 19, Q₁ = 1, Q₂ = 2, and Q₃ = 3. That is, the UE selects/reports one CMR from the first joint report group (for example, joint report group #1), selects/reports two CMRs from the second joint report group (for example, joint report group #2), and selects/reports three CMRs from the third joint report group (for example, joint report group #3). As illustrated in FIG. 19, the CMRs in the respective joint report groups may be different (for example, joint report groups #1 and #2) or may include a common CMR (for example, joint report groups #1 and #3).

According to Embodiment 2.2 described above, the UE can appropriately select and report the CMR.

### [Embodiment 2.3]

As in Embodiment 1.4, a restriction may be provided for at least one of the CMR configured for each CMR group and the CMR of a different CMR group.

In a case where the L1-SINR is configured as a report quantity, the configuration of the ZP-IMR may be the same as in Embodiment 1.5.

In a case where the L1-SINR is configured as a report quantity, the configuration of the NZP-IMR may be the same as in Embodiment 1.5.

### [Embodiment 2.4]

The UE may report, in one CSI report, at least one of a beam index (CRI/SSBRI) indication, a CMR group ID indication, or a per-beam L1-RSRP/L1-SINR value to a base station.

All CMRs may be indexed across all CMR groups. One beam index corresponding to one CMR may be indicated by using ceil(log₂(MAX_allgroup)) bits. ceil(log₂(MAX_allgroup)) means the number of bits of one beam index corresponding to one CMR in a case where all CMRs are indexed across all CMR groups.

In Embodiment 2.1, for each joint report group, the ID of the joint report group having ceil(log₂(P)) bits may be explicitly reported or may not be explicitly reported.

In Embodiment 2.2, for each joint report group, the ID of the joint report group having ceil(log₂(P₁+P₂+P₃+ ...)) bits may be explicitly reported or may not be explicitly reported.

In a case where the ID of the joint report group is not reported, in order for the UE and the base station to commonly recognize which beam belongs to the same joint report group, a rule, a constraint, or a priority regarding an order of beams for each joint report group may be defined.

The UE may generate a CSI report using all beam indexes corresponding to all selected/reported CMRs.

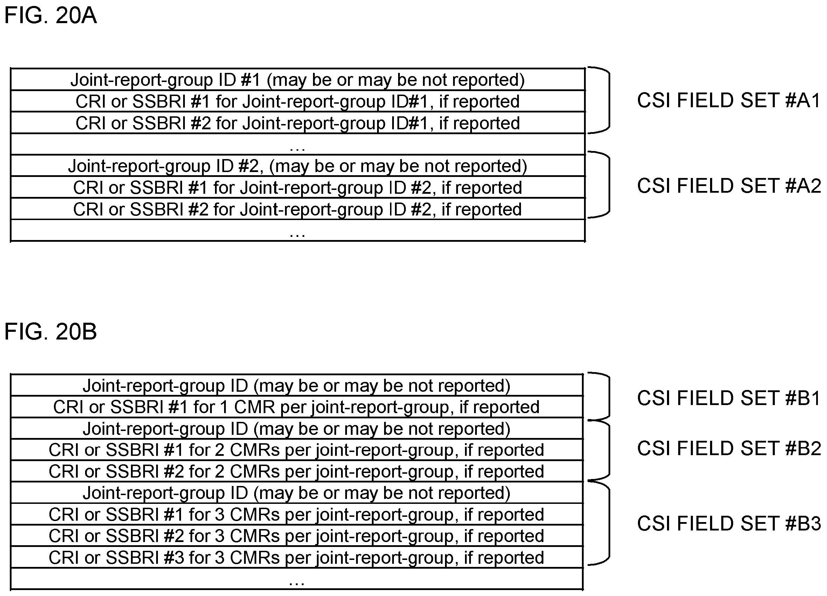

FIGS. 20A and 20B are diagrams illustrating an example of the CSI report. FIG. 20A illustrates mapping of CSI fields included in one CSI report for CRI/RSRP or SSBRI/RSRP reporting. One CSI field may include the ID of one joint report group or one beam index (CRI/SSBRI) corresponding to one CMR. The CSI report may include one or more CSI field sets (for example, CSI field sets #A1 and #A2). One CSI field set may include the ID of one joint report group and beam indexes corresponding to one or more CMRs in the corresponding joint report group. One CSI field set may correspond to one selected/reported joint report group. For example, CSI field sets #A1 and #A2 may respectively correspond to joint report groups #1 and #2 in Embodiment 2.1. The number of CSI field sets may be the same as the number of selected/reported joint report groups. As illustrated in FIG. 20A, in a case where the number of CMRs for each joint report group is the same (in a case of Embodiment 2.1), the number of beam indexes for each CSI field set is the same.

FIG. 20B illustrates mapping of CSI fields included in one CSI report for CRI/RSRP or SSBRI/RSRP reporting. One CSI field may include the ID of one joint report group or one beam index (CRI/SSBRI) corresponding to one CMR. The CSI report may include one or more CSI field sets (for example, CSI field sets #B1, #B2, and #B3). One CSI field set may include the ID of one joint report group and beam indexes corresponding to one or more CMRs in the corresponding joint report group. One CSI field set may correspond to one selected/reported joint report group. For example, CSI field sets #B1, #B2, and #B3 may respectively correspond to joint report groups #1, #2, and #3 in Embodiment 2.2. The number of CSI field sets may be the same as the number of selected/reported joint report groups. As illustrated in FIG. 20B, in a case where the number of CMRs for each joint report group is different (in a case of Embodiment 2.2), the number of beam indexes for each CSI field set is different.

One CSI field may indicate the L1-RSRP/L1-SINR value for the beam.

As in Embodiment 1.6, the L1-RSRP/L1-SINR value for each beam may be mapped or disposed immediately after the corresponding beam index.

As in Embodiment 1.6, the L1-RSRP/L1-SINR value for a beam for each joint report group may be mapped or disposed after the beam index for each joint report group.

As in Embodiment 1.6, the L1-RSRP/L1-SINR values for all beams may be mapped or disposed after all beam indexes.

For the quantization of the L1-RSRP/L1-SINR value for each beam, the following Option A or B may be used.

### [Option A]

Among all measurement values (L1-RSRP/L1-SINR values) for all beams, the strongest value may be quantized with 7 bits (or another bit size having a high quantization resolution), and the remaining values may be differentially quantized with 4 bits (or another bit size having a low quantization resolution).

In the CSI report, a beam having the largest L1-RSRP/L1-SINR value from among all CMRs and the ID of the joint report group may be mapped or disposed prior to other beams.

### [Option B]

Among all measurement values (L1-RSRP/L1-SINR values) for one joint report group, the strongest value may be quantized with 7 bits (or another bit size having a high quantization resolution), and the remaining values in the joint report group may be differentially quantized with 4 bits for each joint report group (or another bit size having a low quantization resolution).

In the CSI report, a beam having the largest L1-RSRP/L1-SINR value from among CMRs for each joint report group may be mapped or disposed prior to other beams included in the same joint report group.

The UE may support the configuration of periodic, aperiodic, or semi-persistent beam reporting in UCI, or the configuration of event-triggered beam reporting via the MAC CE.

### [Variation]

At least one of the number of joint report groups (P, P₁, P₂, P₃, ...) or the number of CMRs for each joint report group (Q, Q₁, Q₂, Q₃, ...) may not be configured by the network. In other words, the UE may determine at least one of P, P₁, P₂, P₃, ..., or Q, Q₁, Q₂, Q₃, ....

At least one of the maximum number of joint report groups (P', P₁', P₂', P₃', ...) or the maximum number of CMRs for each joint report group (Q', Q₁', Q₂', Q₃', ...) may be configured by the network. The UE may determine at least one of the number of joint report groups that is equal to or less than the maximum number of configured joint report groups or the number of CMRs for each joint report group that is equal to or less than the maximum number of CMRs for each configured joint report group.

The size of the CSI report may be variable. In order for the network and the UE to have a common understanding of the contents of the CSI report, the following enhancement may be performed:
- A two-part CSI report is supported, wherein a first part (CSI part 1) has a fixed size and indicates the interpretation and size of a second part (CSI part 2).

For example, the UE may report, in the first part, the number of joint report groups using ceil(log₂(P')) bits. The UE may report, in the first part, the common number of CMRs for each joint report group using ceil(log₂(number of CMR groups)) bits or ceil(log₂(Q')) bits.

For example, the UE may report, in the first part, the number of joint report groups using ceil(log₂(P')) bits. The UE may report, in the first part, a different number of CMRs for each joint report group using P×ceil(log₂(number of CMR groups)) bits or P×ceil(log₂(Q')) bits.

Based on RRC configuration, the MAC CE may activate, indicate, or update at least one of the following.
- One or more CMR groups for beam measurement
- One or more PCIs of one or more CMR groups for beam measurement
- The number of joint report groups (P, P₁, P₂, P₃, ...)/The number of selected/reported CMRs for each joint report group (Q, Q₁, Q₂, Q₃, ...)
- Configuration of ZP-IMR/NZP-IMR
- One or more restrictions according to Embodiment 1.4

The MAC CE may include a CMR group ID, a TRP ID, and a sub-cell ID.

In a case where event-based beam reporting/updating is configured, a plurality of beams reported by the UE (alternatively, a plurality of beams associated with a plurality of TCI states) may be applied to a plurality of channels/RSs in the configured or defined corresponding DL/UL associated with the corresponding CMR group.

In order to support the above application, a restriction may be provided such that up to one joint report group is reported. Alternatively, in a case where a plurality of joint report groups are reported, a specific rule may be used to select a beam to be applied to channel/RS for the corresponding CMR group. The rule may be, for example, using a first joint report group among the plurality of joint report groups, or using a joint report group having the least/most beams.

For each TRP/CMR group, RLM-RS/BFD-RS/PL-RS may be updated as a reporting beam for the corresponding CMR group.

According to the second embodiment described above, the non-group-based beam reporting can be appropriately controlled.

### <Supplement>

### [Notification of Information to UE]

Notification of any information (from the network (NW)) (for example, the base station (BS)) to the UE (in other words, reception of any information from the BS by the UE) in the above-described embodiments may be performed using physical layer signaling (for example, DCI), higher layer signaling (for example, RRC signaling, a MAC CE), a specific signal/channel (for example, a PDCCH, a PDSCH, or a reference signal), or a combination thereof.

In a case where the notification is performed by a MAC CE, the MAC CE may be identified by including, in a MAC subheader, a new logical channel ID (LCID) not defined in existing standards.

In a case where the notification is performed using DCI, the notification may be performed by a specific field of the DCI, a radio network temporary identifier (RNTI) used for scrambling of cyclic redundancy check (CRC) bits added to the DCI, a format of the DCI, or the like.

Furthermore, the notification of any information to the UE in the above-described embodiments may be performed periodically, semi-persistently, or aperiodically.

### [Notification of Information from UE]

Notification of any information from the UE (to the NW) (in other words, transmission/report of any information to the BS by the UE) in the above-described embodiments may be performed using physical layer signaling (for example, UCI), higher layer signaling (for example, RRC signaling, a MAC CE), a specific signal/channel (for example, a PUCCH, a PUSCH, a PRACH, or a reference signal), or a combination thereof.

In a case where the notification is performed by a MAC CE, the MAC CE may be identified by including, in a MAC subheader, an LCID not defined in existing standards.

In a case where the notification is performed by a UCI, the notification may be transmitted using a PUCCH or PUSCH.

Furthermore, the notification of any information from the UE in the above-described embodiments may be performed periodically, semi-persistently, or aperiodically.

### [Regarding Application of Each Embodiment]

At least one of the above-described embodiments may be applied in a case where a specific condition is satisfied. The specific condition may be defined in the standards, or may be notified to the UE/BS using higher layer signaling/physical layer signaling.

At least one of the above-described embodiments may be applied only to a UE that has reported a specific UE capability or supports the specific UE capability.

The specific UE capability may indicate at least one of the following:
- Supporting specific processing, operation, control, or information for at least one of the above-described embodiments,
- Supporting cell-free, group-based beam reporting, or non-group-based beam reporting,
- The number of supported CMRs, CMR groups, joint report groups, CMRs for each CMR group, or CMRs for each joint report group.

Furthermore, the specific UE capability may be capability applied across all the frequencies (in common irrespective of frequency), may be capability for each frequency (for example, one of a cell, a band, a band combination, a BWP, a component carrier, and the like or a combination thereof), may be capability for each frequency range (for example, Frequency Range 1 (FR1), FR2, FR3, FR4, FR5, FR2-1, and FR2-2), may be capability for each subcarrier spacing (SCS), or may be capability for each Feature Set (FS) or Feature Set Per Component-carrier (FSPC).

Furthermore, the specific UE capability may be capability applied across all the duplex schemes (in common irrespective of duplex scheme) or may be capability for each duplex scheme (for example, time division duplex (TDD) and frequency division duplex (FDD)).

Furthermore, at least one of the above-described embodiments may be applied in a case where the UE is configured/activated/triggered with specific information related to the above-described embodiments (or to perform the operation of the above-described embodiments) by higher layer signaling/physical layer signaling. For example, the specific information may be information indicating activation of cell-free, group-based beam reporting, or non-group-based beam reporting, information regarding the number of CMRs, CMR groups, joint report groups, CMRs for each CMR group, or CMRs for each joint report group, any RRC parameter for a specific release (for example, Rel. 20 and subsequent releases), or the like.

The UE may apply, for example, the operations of Rel. 15/16/17/18 in a case where the UE does not support at least one of the specific UE capabilities or is not configured with the specific information.

### (Supplementary Note 1)

Regarding one embodiment of the present disclosure, the following supplementary notes of the invention will be given.

### [Supplementary Note 1-1]

A terminal including:
a receiving section that receives, in a case where group-based beam reporting is not configured, a configuration regarding the number of channel measurement resources (CMRs) to be reported; and
a control section that controls transmission of reporting of a plurality of CMRs based on the configuration.

### [Supplementary Note 1-2]

The terminal according to Supplementary Note 1-1, in which the configuration includes M, which is the number of CMR groups for the reporting, and N, which is the number of CMRs for the reporting for each CMR group, and
the control section selects N CMRs from among each of the M CMR groups.

### [Supplementary Note 1-3]

The terminal according to Supplementary Note 1-1 or 1-2, in which the configuration includes K, which is the number of CMRs for the reporting across a plurality of CMR groups, and
the control section selects a total of K CMRs from among the plurality of CMR groups.

### [Supplementary Note 1-4]

The terminal according to any one of Supplementary Notes 1-1 to 1-3, in which CMRs included in the same CMR group among the plurality of CMRs are associated with the same physical cell ID (PCI).

### (Supplementary Note 2)

Regarding one embodiment of the present disclosure, the following supplementary notes of the invention will be given.

### [Supplementary Note 2-1]

A terminal including:
a receiving section that receives, in a case where group-based beam reporting is not configured, a configuration for channel state information (CSI) reporting; and
a control section that controls, based on the configuration, transmission of the CSI reporting including a plurality of first fields indicating beam indexes corresponding to CMRs indexed for each channel measurement resource (CMR) group, and a plurality of second fields indicating IDs of CMR groups.

### [Supplementary Note 2-2]

The terminal according to Supplementary Note 2-1, in which the CSI reporting includes one or more field sets, and
one field set corresponds to one CMR group, and includes one or more first fields and one second field.

### [Supplementary Note 2-3]

The terminal according to Supplementary Note 2-1 or 2-2, in which the CSI reporting includes one or more field sets, and
one field set corresponds to one CMR in one CMR group, and includes one first field and one second field.

### [Supplementary Note 2-4]

The terminal according to any one of Supplementary Notes 2-1 to 2-3, in which one first field includes a number of bits based on the number of CMRs included in one CMR group.

### (Supplementary Note 3)

Regarding one embodiment of the present disclosure, the following supplementary notes of the invention will be given.

### [Supplementary Note 3-1]

A terminal including:
a receiving section that receives, in a case where group-based beam reporting is configured, a configuration regarding the number of channel measurement resources (CMRs) to be reported; and
a control section that controls, based on the configuration, transmission of reporting of a plurality of joint report groups each including a plurality of CMRs.

### [Supplementary Note 3-2]

The terminal according to Supplementary Note 3-1, in which the configuration includes P, which is the number of joint report groups, and Q, which is the number of CMRs per joint report group, and
the control section selects P joint report groups each including Q CMRs.

### [Supplementary Note 3-3]

The terminal according to Supplementary Note 3-1 or 3-2, in which the plurality of CMRs included in the plurality of joint report groups are different from each other.

### [Supplementary Note 3-4]

The terminal according to any one of Supplementary Notes 3-1 to 3-3, in which the plurality of joint report groups include a first joint report group and a second joint report group, and
the number of CMRs included in the first joint report group is different from the number of CMRs included in the second joint report group.

### (Supplementary Note 4)

Regarding one embodiment of the present disclosure, the following supplementary notes of the invention will be given.

### [Supplementary Note 4-1]

A terminal including:
a receiving section that receives, in a case where group-based beam reporting is configured, a configuration for channel state information (CSI) reporting; and
a control section that controls, based on the configuration, transmission of the CSI reporting including a plurality of first fields indicating beam indexes corresponding to CMRs indexed across a plurality of channel measurement resource (CMR) groups, and a plurality of second fields indicating IDs of joint report groups each including a plurality of CMR.

### [Supplementary Note 4-2]

The terminal according to Supplementary Note 4-1, in which the CSI reporting includes one or more field sets,
one field set corresponds to one joint report group, and includes one or more first fields and one second field, and
different field sets include the same number of first fields.

### [Supplementary Note 4-3]

The terminal according to Supplementary Note 4-1 or 4-2, in which the CSI reporting includes one or more field sets,
one field set corresponds to one joint report group, and includes one or more first fields and one second field, and
different field sets include different numbers of the first fields.

### [Supplementary Note 4-4]

The terminal according to any one of Supplementary Notes 4-1 to 4-3, in which one first field includes a number of bits based on the number of CMRs across the plurality of CMR groups.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

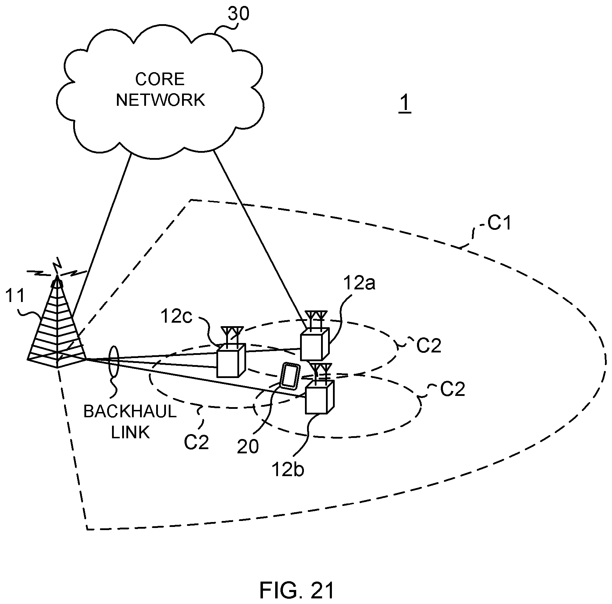

FIG. 21 is a diagram illustrating an example of a schematic configuration of the radio communication system according to one embodiment. A radio communication system 1 (simply referred to as a system 1) may be a system that implements communication using long term evolution (LTE), 5th generation mobile communication system New Radio (5G NR), and the like defined by third generation partnership project (3GPP).

Furthermore, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), and dual connectivity between NR and LTE (NR-E-UTRA dual connectivity (NE-DC)).

In the EN-DC, an LTE (E-UTRA) base station (eNB) is a master node (MN), and an NR base station (gNB) is a secondary node (SN). In the NE-DC, the NR base station (gNB) is MN, and the LTE (E-UTRA) base station (eNB) is SN.

The radio communication system 1 may support dual connectivity between a plurality of base stations in the same RAT (for example, dual connectivity in which both MN and SN are NR base stations (gNBs) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form a small cell C2 narrower than the macro cell C1. A user terminal 20 may be located within at least one cell. The arrangement, number, and the like of cells and the user terminals 20 are not limited to the aspects illustrated in the drawings. Hereinafter, the base stations 11 and 12 will be collectively referred to as "base station 10" in a case where the base stations 11 and 12 are not distinguished from each other.

The user terminal 20 may be connected to at least one of a plurality of base stations 10. The user terminal 20 may use at least one of carrier aggregation (CA) using a plurality of component carriers (CC) or dual connectivity (DC).

Each CC may be included in at least one of a first frequency band (frequency range 1 (FR1)) or a second frequency band (frequency range 2 (FR2)). The macro cell C1 may be included in the FR1, and the small cell C2 may be included in the FR2. For example, the FR1 may be a frequency band of 6 GHz or less (sub-6 GHz), and the FR2 may be a frequency band higher than 24 GHz (above-24 GHz). Note that the frequency bands, definitions, and the like of the FR1 and FR2 are not limited thereto, and, for example, the FR1 may correspond to a frequency band higher than the FR2.

Furthermore, the user terminal 20 may perform communication in each CC using at least one of Time Division Duplex (TDD) or Frequency Division Duplex (FDD).

The plurality of base stations 10 may be connected to each other in a wired manner (for example, an optical fiber, an X2 interface, or the like in compliance with common public radio interface (CPRI)) or in a wireless manner (for example, NR communication). For example, in a case where NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), or the like.

The core network 30 may include, for example, network functions (NFs) such as a user plane function (UPF), an access and mobility management function (AMF), a session management function (SMF), a unified data management (UDM), an application function (AF), a data network (DN), a location management function (LMF), or an operation, administration and maintenance (management) (OAM). Note that a plurality of functions may be provided by one network node. Furthermore, communication with an external network (for example, the Internet) may be performed via the DN.

The user terminal 20 may be a terminal that corresponds to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, a physical downlink shared channel (PDSCH) shared by each user terminal 20, a physical broadcast channel (PBCH), a physical downlink control channel (PDCCH), or the like may be used as downlink channels.

Furthermore, in the radio communication system 1, as an uplink channel, a physical uplink shared channel (PUSCH) shared by each user terminal 20, a physical uplink control channel (PUCCH), a physical random access channel (PRACH), or the like, may be used.

User data, higher layer control information, a system information block (SIB), and the like are transmitted on the PDSCH. The user data, higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH or the PUSCH.

Note that the DCI that schedules the PDSCH may be referred to as DL assignment, DL DCI, or the like, and the DCI that schedules the PUSCH may be referred to as UL grant, UL DCI, or the like. Note that the PDSCH may be interchangeable with DL data, and the PUSCH may be interchangeable with UL data.

For detection of the PDCCH, a control resource set (CORESET) and a search space may be used. The CORESET corresponds to a resource for searching for DCI. The search space corresponds to a search area and a search method for PDCCH candidates. One CORESET may be associated with one or more search spaces. The UE may monitor CORESET associated with a certain search space based on search space configuration.

One search space may correspond to a PDCCH candidate corresponding to one or more aggregation levels. One or more search spaces may be referred to as a search space set. Note that "search space", "search space set", "search space configuration", "search space set configuration", "CORESET", "CORESET configuration", and the like in the present disclosure may be interchangeably used.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that in the present disclosure, downlink, uplink, and the like may be expressed without "link". Furthermore, various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) and a secondary synchronization signal (SSS). A signal block including the SS (PSS or SSS) and the PBCH (and the DMRS for the PBCH) may be referred to as an SS/PBCH block, an SS block (SSB), or the like. Note that the SS, the SSB, or the like may also be referred to as a reference signal.

Furthermore, in the radio communication system 1, a sounding reference signal (SRS), a demodulation reference signal (DMRS), or the like may be transmitted as an uplink reference signal (UL-RS). Note that the DMRS may be referred to as "UE-specific reference signal".

### (Base Station)

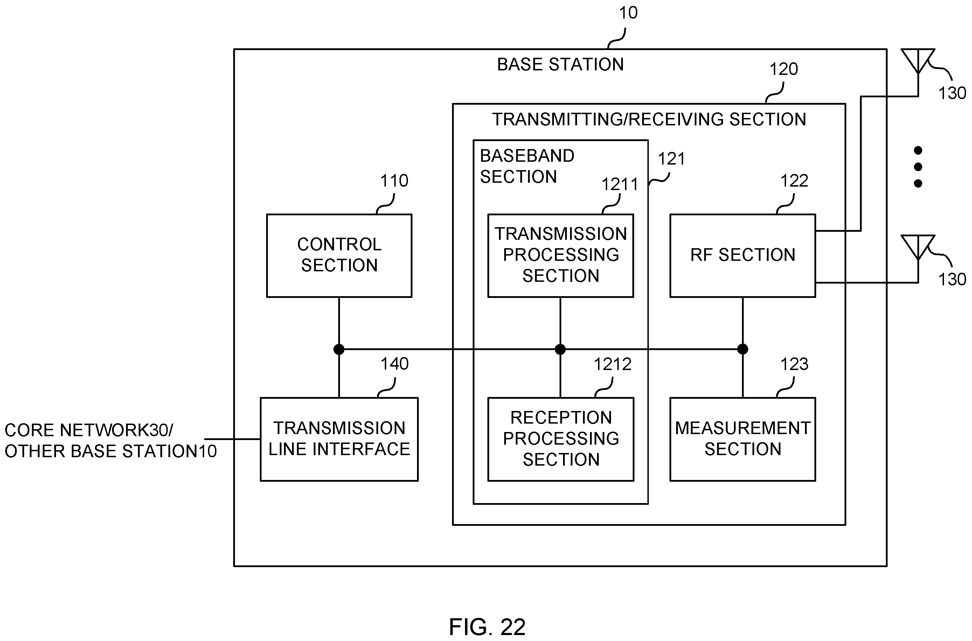

FIG. 22 is a diagram illustrating an example of a configuration of the base station according to one embodiment. The base station 10 includes a control section 110, a transmitting/receiving section 120, a transmitting/receiving antenna 130, and a transmission line interface 140. Note that one or more control sections 110, one or more transmitting/receiving sections 120, one or more transmitting/receiving antennas 130, and one or more transmission line interfaces 140 may be included.

Note that this example mainly describes a functional block which is a characteristic part of the present embodiment, and it may be assumed that the base station 10 also has another functional block necessary for radio communication. A part of processing of each section to be described below may be omitted.

The control section 110 controls the entire base station 10. The control section 110 can be constituted by a controller, a control circuit, or the like, which is described based on common understanding in the technical field related to the present disclosure.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the transmission line interface 140. The control section 110 may generate data to be transmitted as a signal, control information, a sequence, and the like, and may transfer the data, the control information, the sequence, and the like to the transmitting/receiving section 120. The control section 110 may perform call processing (such as configuration or release) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, and a transmission/reception circuit, which are described based on common understanding in the technical field related to the present disclosure.

The transmitting/receiving section 120 may be constituted as an integrated transmitting/receiving section, or may be constituted by a transmitting section and a receiving section. The transmitting section may include the transmission processing section 1211 and the RF section 122. The receiving section may include the reception processing section 1212, the RF section 122, and the measurement section 123.

The transmitting/receiving antenna 130 can be constituted by an antenna described based on common understanding in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam or a reception beam using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (as necessary), inverse fast Fourier transform (IFFT) processing, precoding, or digital-to-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmitting/receiving antenna 130.

Meanwhile, the transmitting/receiving section 120 (RF section 122) may perform amplification, filtering processing, demodulation to a baseband signal, and the like on the signal in the radio frequency band received by the transmitting/receiving antenna 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. A measurement result may be output to the control section 110.

The transmission line interface 140 may transmit/receive a signal (backhaul signaling) to and from an apparatus (for example, a network node providing the NF) included in the core network 30, another base station 10, and the like, and may acquire and transmit user data (user plane data), control plane data, and the like for the user terminal 20.

Note that the transmitting section and the receiving section of the base station 10 in the present disclosure may include at least one of the transmitting/receiving section 120, the transmitting/receiving antenna 130, or the transmission line interface 140.

The base station 10 may be at least one of the following base stations 1 to 4.

### (Base Station 1)

In a case where the group-based beam reporting is not configured, the transmitting/receiving section 120 may transmit a configuration regarding the number of channel measurement resources (CMRs) to be reported (for example, RRC signaling for configuring M, N, and K in the first embodiment). In this case, the control section 110 may control reception of reporting of a plurality of CMRs selected based on the configuration (for example, in the first embodiment, the selected/reported M×N/K CMRs).

### (Base Station 2)

In a case where the group-based beam reporting is not configured, the transmitting/receiving section 120 may transmit a configuration for channel state information (CSI) reporting (for example, RRC signaling for configuring M, N, and K in the first embodiment). In this case, the control section 110 may control reception of the CSI reporting including a plurality of first fields (for example, a plurality of CSI fields including beam indexes (CRIs/SSBRIs) in FIGS. 14B and 14C) indicating beam indexes corresponding to CMRs indexed for each channel measurement resource (CMR) group, and a plurality of second fields (for example, a plurality of CSI fields including the CMR group IDs in FIGS. 14B and 14C) indicating IDs of the CMR groups, the CSI reporting being transmitted based on the configuration.

### (Base Station 3)

In a case where the group-based beam reporting is configured, the transmitting/receiving section 120 may transmit a configuration regarding the number of channel measurement resources (CMRs) to be reported (for example, RRC signaling for configuring P, P₁, P₂, P₃, Q, Q₁, Q₂, and Q₃ in the second embodiment). In this case, the control section 110 may control reception of reporting of a plurality of joint report groups each including a plurality of CMRs, which is transmitted based on the configuration.

### (Base Station 4)

In a case where the group-based beam reporting is configured, the transmitting/receiving section 120 may transmit a configuration for channel state Information (CSI) reporting (for example, RRC signaling for configuring P, P₁, P₂, P₃, Q, Q₁, Q₂, and Q₃ in the second embodiment). In this case, the control section 110 may control reception of the CSI reporting including a plurality of first fields (for example, a plurality of CSI fields including beam indexes (CRIs/SSBRIs) in FIGS. 20A and 20B) indicating beam indexes corresponding to CMRs indexed across a plurality of channel measurement resource (CMR) groups, and a plurality of second fields (for example, a plurality of CSI fields including IDs of joint report groups in FIGS. 20A and 20B) indicating IDs of the joint report groups including a plurality of CMRs, the CSI reporting being transmitted based on the configuration.

### (User Terminal)

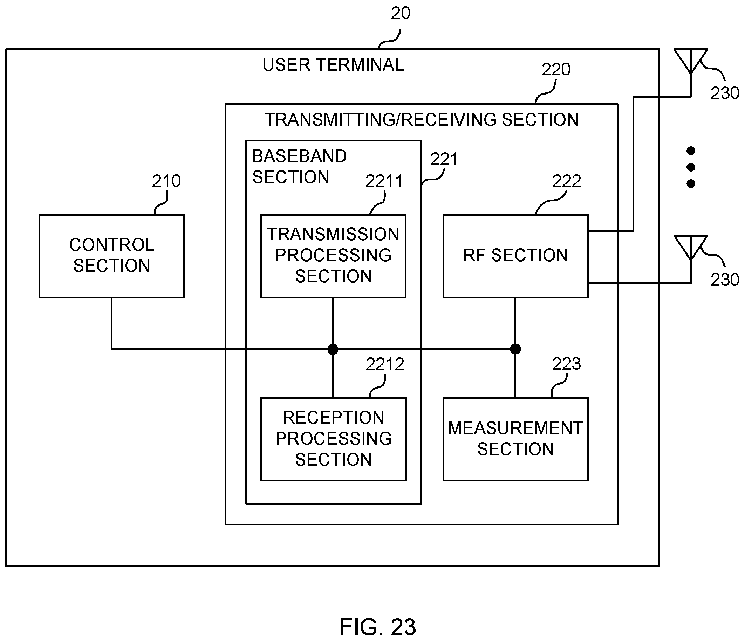

FIG. 23 illustrates an example of a configuration of the user terminal according to one embodiment. The user terminal 20 includes a control section 210, a transmitting/receiving section 220, and a transmitting/receiving antenna 230. Note that one or more control sections 210, one or more transmitting/receiving sections 220, and one or more transmitting/receiving antennas 230 may be included.

Note that although this example mainly describes functional blocks of a characteristic part of the present embodiment, it may be assumed that the user terminal 20 includes other functional blocks that are necessary for radio communication as well. A part of processing of each section to be described below may be omitted.

The control section 210 controls the entire user terminal 20. The control section 210 can include a controller and a control circuit, which are described based on common understanding in the technical field related to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, and a transmission/reception circuit, which are described based on common understanding in the technical field related to the present disclosure.

The transmitting/receiving section 220 may be constituted as an integrated transmitting/receiving section, or may be constituted by a transmitting section and a receiving section. The transmitting section may include the transmission processing section 2211 and the RF section 222. The receiving section may include the reception processing section 2212, the RF section 222, and the measurement section 223.

The transmitting/receiving antenna 230 can include an antenna that is described based on common understanding in the technical field related to the present disclosure, for example, an array antenna or the like.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam or a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (as necessary), IFFT processing, precoding, or digital-to-analog conversion on the bit string to be transmitted, to output a baseband signal.

Note that whether or not to apply DFT processing may be determined based on configuration of transform precoding. In a case where transform precoding is enabled for a certain channel (for example, PUSCH), the transmitting/receiving section 220 (transmission processing section 2211) may perform DFT processing as the transmission processing in order to transmit the channel using a DFT-s-OFDM waveform, and otherwise, DFT processing may not be performed as the transmission processing.

The transmitting/receiving section 220 (RF section 222) may perform modulation to a radio frequency band, filtering processing, amplification, and the like on the baseband signal, to transmit a signal in the radio frequency band via the transmitting/receiving antenna 230.

Meanwhile, the transmitting/receiving section 220 (RF section 222) may perform amplification, filtering processing, demodulation to a baseband signal, and the like on the signal in the radio frequency band received by the transmitting/receiving antenna 230.

The transmitting/receiving section 220 (reception processing section 2212) may apply reception processing such as analog-digital conversion, FFT processing, IDFT processing (as necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. A measurement result may be output to the control section 210.

Note that the measurement section 223 may derive channel measurement for CSI computation, based on a channel measurement resource. The channel measurement resource may be, for example, a non-zero power (NZP) CSI-RS resource. Furthermore, the measurement section 223 may derive interference measurement for CSI computation, based on the interference measurement resource. The interference measurement resource may be at least one of an NZP CSI-RS resource for interference measurement, a CSI-interference measurement (IM) resource, or the like. Note that the CSI-IM may be referred to as CSI-interference management (IM), and may be interchangeable with a zero power (ZP) CSI-RS. Note that, in the present disclosure, CSI-RS, NZP CSI-RS, ZP CSI-RS, CSI-IM, CSI-SSB, NZP-IMR, ZP-IMR, and the like may be interchangeable with each other.

Note that the transmitting section and the receiving section of the user terminal 20 in the present disclosure may include at least one of the transmitting/receiving section 220 or the transmitting/receiving antenna 230.

The user terminal 20 may be at least one of the following user terminals 1 to 4.

### (User Terminal 1)

In a case where the group-based beam reporting is not configured, the transmitting/receiving section 220 may receive a configuration regarding the number of channel measurement resources (CMRs) to be reported (for example, RRC signaling for configuring M, N, and K in the first embodiment). In this case, the control section 210 may control transmission of reporting of a plurality of CMRs (for example, in the first embodiment, the selected/reported M×N/K CMRs), based on the configuration.

The configuration may include M, which is the number of CMR groups for the reporting (for example, in the first embodiment, the number (M) of selected/reported CMR groups), and N, which is the number of CMRs for the reporting per CMR group (for example, in the first embodiment, the number (N) of CMRs for each CMR group to be selected/reported). In this case, the control section 210 may select N CMRs from each of M CMR groups.

The configuration may include K, which is the number of CMRs for the reporting across a plurality of CMR groups (for example, in the first embodiment, the number (K) of selected/reported CMRs across all configured CMR groups). In this case, the control section 210 may select a total of K CMRs from the plurality of CMR groups.

CMRs included in the same CMR group among the plurality of CMRs may be associated with the same physical cell ID (PCI).

### (User Terminal 2)

In a case where the group-based beam reporting is not configured, the transmitting/receiving section 220 may receive a configuration for channel state Information (CSI) reporting (for example, RRC signaling for configuring M, N, and K in the first embodiment). In this case, the control section 210 may control transmission of the CSI reporting including a plurality of first fields (for example, a plurality of CSI fields including beam indexes (CRIs/SSBRIs) in FIGS. 14B and 14C) indicating beam indexes corresponding to CMRs indexed for each channel measurement resource (CMR) group, and a plurality of second fields (for example, a plurality of CSI fields including the CMR group IDs in FIGS. 14B and 14C) indicating IDs of the CMR groups, based on the configuration.

The CSI reporting may include one or more field sets (for example, CSI field sets #A1 and #A2 in FIG. 14B). One field set may correspond to one CMR group, and may include one or more first fields and one second field.

The CSI reporting may include one or more field sets (for example, CSI field sets #B1, #B2, ... in FIG. 14C). One field set may correspond to one CMR in one CMR group, and may include one first field and one second field.

One first field may have the number of bits (for example, ceil(log₂(MAX_pergroup)) in Embodiment 1.6) based on the number of CMRs included in one CMR group.

### (User Terminal 3)

In a case where the group-based beam reporting is configured, the transmitting/receiving section 220 may receive a configuration regarding the number of channel measurement resources (CMRs) to be reported (for example, RRC signaling for configuring P, P₁, P₂, P₃, Q, Q₁, Q₂, and Q₃ in the second embodiment). In this case, the control section 210 may control transmission of reporting of a plurality of joint report groups each including a plurality of CMRs, based on the configuration.

The configuration may include P, which is the number of joint report groups (for example, in Embodiment 2.1, the number (P) of selected/reported joint report groups), and Q, which is the number of CMRs per joint report group (for example, in Embodiment 2.1, the number (Q) of CMRs for each joint report group to be selected/reported). In this case, the control section 210 may select P joint report groups each including Q CMRs.

The plurality of CMRs included in the plurality of joint report groups may be different from each other.

The plurality of joint report groups may include a first joint report group and a second joint report group. The number of CMRs included in the first joint report group (for example, in Embodiment 2.2, the number (Q₁) of CMRs in the first joint report group) may be different from the number of CMRs included in the second joint report group (for example, in Embodiment 2.2, the number (Q₂) of CMRs in the second joint report group).

### (User Terminal 4)

In a case where the group-based beam reporting is configured, the transmitting/receiving section 220 may receive a configuration for channel state Information (CSI) reporting (for example, RRC signaling for configuring P, P₁, P₂, P₃, Q, Q₁, Q₂, and Q₃ in the second embodiment). In this case, the control section 210 may control transmission of the CSI reporting including a plurality of first fields (for example, a plurality of CSI fields including beam indexes (CRIs/SSBRIs) in FIGS. 20A and 20B) indicating beam indexes corresponding to CMRs indexed across a plurality of channel measurement resource (CMR) groups, and a plurality of second fields (for example, a plurality of CSI fields including IDs of joint report groups in FIGS. 20A and 20B) indicating IDs of the joint report groups including a plurality of CMRs, based on the configuration.

The CSI reporting may include one or more field sets (for example, CSI field sets #A1 and #A2 in FIG. 20A). One field set may correspond to one joint report group, and may include one or more first fields and one second field. Different field sets may include the same number of first fields.

The CSI reporting may include one or more field sets (for example, CSI field sets #B1, #B2, and #B3 in FIG. 20B). One field set may correspond to one joint report group, and may include one or more first fields and one second field. The different field sets may include different numbers of the first fields.

One first field may have a number of bits based on the number of CMRs across a plurality of CMR groups.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

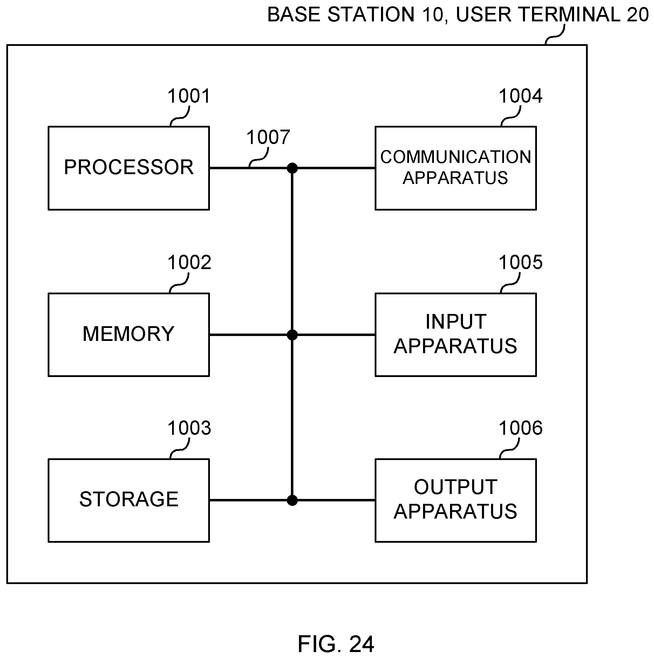

For example, a base station, a user terminal, and so on according to one embodiment of the present disclosure may function as a computer that executes the processes of the radio communication method of the present disclosure. FIG. 24 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

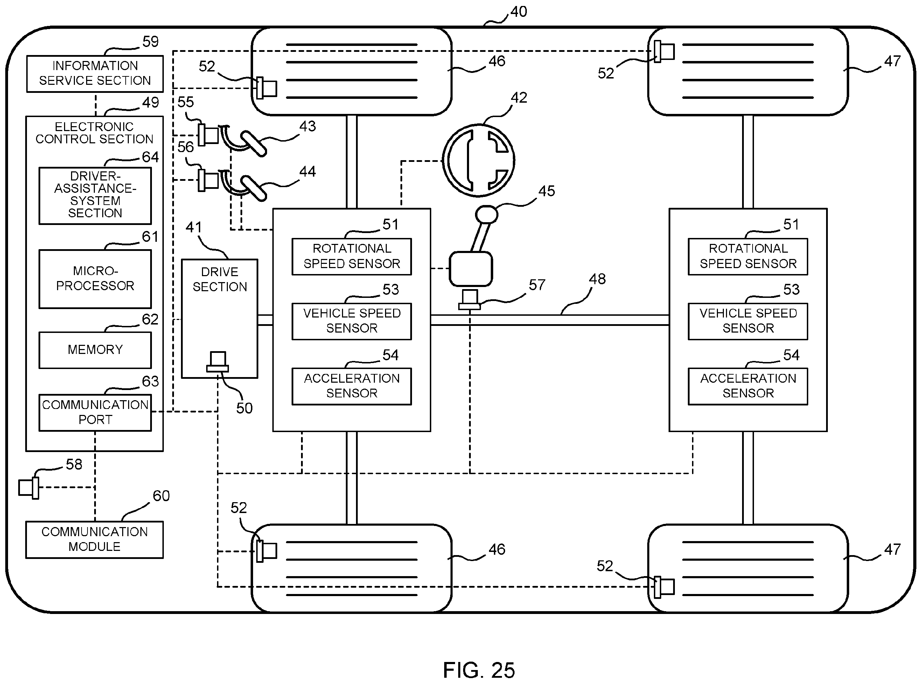

FIG. 25 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives, in a case where group-based beam reporting is not configured, a configuration regarding the number of channel measurement resources (CMRs) to be reported; and
a control section that controls transmission of reporting of a plurality of CMRs based on the configuration.

2. The terminal according to claim 1, wherein the configuration includes M, which is the number of CMR groups for the reporting, and N, which is the number of CMRs for the reporting per CMR group, and
the control section selects N CMRs from among each of the M CMR groups.

3. The terminal according to claim 1, wherein the configuration includes K, which is the number of CMRs for the reporting across a plurality of CMR groups, and
the control section selects a total of K CMRs from among the plurality of CMR groups.

4. The terminal according to claim 1, wherein CMRs included in the same CMR group among the plurality of CMRs are associated with the same physical cell ID (PCI).

5. A radio communication method of a terminal, the method comprising:
a step of receiving, in a case where group-based beam reporting is not configured, a configuration regarding the number of channel measurement resources (CMRs) to be reported; and
a step of controlling transmission of reporting of a plurality of CMRs based on the configuration.

6. A base station comprising:
a transmitting section that transmits, in a case where group-based beam reporting is not configured, a configuration regarding the number of channel measurement resources (CMRs) to be reported; and
a control section that controls reception of reporting of a plurality of CMRs selected based on the configuration.
